(19) Europäisches Patentamt
European Patent Office
Office européen des brevets

(11) **EP 4 196 678 B1**

(12) **EUROPÄISCHE PATENTSCHRIFT**

(45) Veröffentlichungstag und Bekanntmachung des Hinweises auf die Patenterteilung:
**09.10.2024 Patentblatt 2024/41**

(21) Anmeldenummer: **21769631.9**

(22) Anmeldetag: **12.08.2021**

(51) Internationale Patentklassifikation (IPC):
**F03D 17/00** *(2016.01)*

(52) Gemeinsame Patentklassifikation (CPC):
**F03D 17/00;** F05B 2270/33; F05B 2270/80; F05B 2270/807; Y02E 10/72

(86) Internationale Anmeldenummer:
**PCT/AT2021/060282**

(87) Internationale Veröffentlichungsnummer:
**WO 2022/032321 (17.02.2022 Gazette 2022/07)**

(54) **MESSVORRICHTUNG FÜR WINDKRAFTANLAGEN**

MEASURING DEVICE FOR WIND TURBINES

DISPOSITIF DE MESURE POUR ÉOLIENNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.08.2020 AT 506832020**

(43) Veröffentlichungstag der Anmeldung:
**21.06.2023 Patentblatt 2023/25**

(73) Patentinhaber: **eologix sensor technology gmbh**
**8020 Graz (AT)**

(72) Erfinder:
• **MOSER, Michael**
**8020 Graz (AT)**
• **LOSS, Theresa**
**8020 Graz (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
EP-A2- 2 202 406    JP-A- 2013 231 409
US-A1- 2011 150 647    US-A1- 2012 303 277
US-A1- 2015 118 047    US-B2- 8 951 011

**Beschreibung**

Die Erfindung betrifft eine Messanordnung zur Erfassung von Verformungen, insbesondere Verbiegungen der äußeren Oberfläche, eines Konstruktionselementes einer Windkraftanlage, wobei das Konstruktionselement ein Rotorblatt der Windkraftanlage ist, umfassend zumindest drei, vorzugsweise zumindest fünf, an dem Konstruktionselement angeordnete Messstellen, die in Richtung der Längserstreckung, des Konstruktionselementes voneinander beabstandet sind und jeweils zumindest einen Beschleunigungssensor aufweisen, wobei die Beschleunigungssensoren - vorzugsweise über eine Drahtlos-Schnittstelle - mit einer Auswerteeinrichtung kommunikationsverbindbar sind. Die Erfindung betrifft auch eine Windkraftanlage gemäß dem Oberbegriff des Anspruch 10 und ein Verfahren zum Betreiben einer Windkraftanlage gemäß dem Oberbegriff des Anspruch 12.

Die EP2202406A2 offenbart eine Windkraftanlage mit zumindest einem GPS Sensor, der auch an einem Rotorblatt angeordnet sein kann. Mit diesen GPS Sensoren wird eine Auslenkung einer Komponente der Windkraftanlage bestimmt.

Die US2015118047A1 offenbart ein Verfahren zur Bestimmung von Parametern einer Windturbine, bei dem Signale zumindest einer Micor Inertial Mess Einheit (MIMU), die an oder innerhalb einer Komponente der Windturbine montiert ist, empfangen werden und bei dem basierend auf diesen Signalen zumindest ein Parameter der Windturbine bestimmt wird. Der Parameter kann sich auf den Pitch, die Rotationsgeschwindigkeit, strukturelle Vibrationen, Biegemomente, Torsionsmomente, Verschiebung der Spitze, dreidimensionale Bewegungsverfolgung, Biegemoment des Turmes, das Gieren, Rotorgeschwindigkeit, Generatorgeschwindigkeit, Drehmoment, Schubspannung, Last, Turmneigung und die Rotorposition beziehen.

Die US2011150647A1 offenbart eine Anordnung zur Detektion einer Biegeverformung einer Windturbinenblattes, umfassend einen Radiosender und ein lineares Antennenarry, welches dem Radiosender zugeordnet ist. Der Radiosender ist auf der Blattspitze montiert und sendet ein Signal. Das Antennenarray ist auf dem Rotor in mitrotierender Weise montiert und empfängt das Signal. Anhand der Transitzeiten des Signals von dem Radiosender zu den einzelnen Antennen des Antennenarrays wird dessen Position bestimmt.

Die US8951011B2 offenbart eine Windturbine mit einem ersten Beschleunigungsmesser, welcher an einer ersten radialen Position eines Blattes montiert ist, zur Bestimmung eines ersten Beschleunigungswertes und einem zweiten Beschleunigungsmesser, welcher an einer zweiten radialen Position des Blattes montiert ist, zur Bestimmung eines zweiten Beschleunigungswertes. Dabei wird aus dem Beschleunigungswert des ersten Beschleunigungsmessers der zweite Beschleunigungswert geschätzt und bei einer Abweichung des bestimmten zweiten Beschleunigungswertes vom geschätzten Beschleunigungswert ein Signal generiert.

Die DE 10 2018 119733 A1 offenbart ein Verfahren zur Torsionsüberwachung und/oder Pitchüberwachung eines Rotorblattes einer Windenergieanlage. Dabei wird eine erste Beschleunigung in mindestens zwei ersten Dimensionen an einer ersten Position des Rotorblatts und eine zweite Beschleunigung in mindestens zwei zweiten Dimensionen an einer von der ersten Position radial beabstandeten zweiten Position des Rotorblatts gemessen. Die Bestimmung einer Torsion und/oder eines Pitchwinkels des Rotorblatts erfolgt anhand erster Beschleunigungsanteile in den zwei ersten Dimensionen der ersten Beschleunigung und anhand zweiter Beschleunigungsanteile in den zwei zweiten Dimensionen der zweiten Beschleunigung. Mit einem solchen Verfahren sind - über die Torsion hinaus - keine weiteren Verformungen ermittelbar. Zudem ist die Genauigkeit der Torsionsermittlung ungenügend und hängt stark von der Kenntnis der exakten Position der Beschleunigungssensoren ab. Letztere ist aber aufgrund von Herstellungstoleranzen, Alterungseffekten bzw. dauerhaften Verformungen des Rotorblattes meist nicht genau bekannt, sodass nicht erkennbare Fehler in der Ermittlung der Torsion auftreten können.

Die DE 10 2010 032120 A1 offenbart ein Verfahren zur Bestimmung eines Biegewinkels eines Rotorblattes einer Windkraftanlage. Dabei wird ein Beschleunigungssignal, das eine auf das Rotorblatt im wesentlichen senkrecht zur Rotorebene wirkende Beschleunigung repräsentiert und der Biegewinkel unter Verwendung des Beschleunigungssignals bestimmt. In einer Ausführungsform wird bei der Bestimmung des Biegewinkels eine Information über einen Abstand eines das Beschleunigungssignal bereitstellenden Beschleunigungssensors von einer Rotorachse, einem Neigungswinkel der Rotorachse gegenüber der Horizontalen und/oder einer Beschleunigung eines Turmkopfes der Windkraftanlage verwendet sowie eine Information über die Drehgeschwindigkeit und der Drehposition des Rotors. Es hat sich jedoch gezeigt, dass die bloße Kenntnis der Drehgeschwindigkeit und der Drehposition des Rotors die Genauigkeit in der Ermittlung von Verformungen nicht ausreichend erhöht.

Aufgabe der vorliegenden Erfindung war es, die Nachteile des Standes der Technik zu überwinden und eine Windkraftanlagen-Messanordnung zur Verfügung zu stellen, mittels derer Verformungen eines Konstruktionselementes einer Windkraftanlage mit hoher Genauigkeit erfasst werden können.

Diese Aufgabe wird durch eine Messanordnung der eingangs genannten Art dadurch gelöst, dass die Messanordnung zumindest zwei, an dem Konstruktionselement angeordnete und in Richtung der Längserstreckung des Konstruktionselementes voneinander beabstandete Geschwindigkeitssensoren, insbesondere Winkelgeschwindigkeitssensoren, aufweist und/oder dass die Messanordnung zumindest zwei, an dem Konstruktionselement angeordnete und in Richtung der Längserstreckung des Konstruktionselementes voneinander beabstandete Lagesensoren, insbesondere Magnetfeldsensoren, aufweist,

wobei die Messstellen jeweils - zusätzlich zu dem Beschleunigungssensor - zumindest einen Geschwindigkeitssensor und/oder zumindest einen Lagesensor aufweisen und
wobei die Geschwindigkeitssensoren und/oder die Lagesensoren mit der Auswerteeinrichtung - vorzugsweise über eine Drahtlos-Schnittstelle - kommunikationsverbindbar sind,
und dass zumindest eine, vorzugsweise zumindest zwei, der Messstellen im Bereich der Rotorblattspitze und/oder in einem Abstand von der Rotorblattspitze, der höchstens so groß ist wie 20% der Gesamtlänge des Rotorblattes, angeordnet ist/sind,
und dass

zumindest eine Messstelle abseits der Verbindungsgeraden zwischen den äußersten Messstellen der Messanordnung, vorzugsweise zwischen der Messstelle, die der Rotorblattwurzel am nächsten liegt, und der Messstelle, die der Rotorblattspitze am nächsten liegt, angeordnet ist, wobei vorzugsweise der Normalabstand von der Verbindungsgeraden zumindest 20cm, vorzugsweise zumindest 50cm, beträgt, und/oder zumindest 0,5%, bevorzugt zumindest 1% der Längserstreckung des Konstruktionselementes beträgt,
und/oder dass zumindest eine Messstelle an einer ersten Seite, insbesondere der Vorderseite, des Konstruktionselementes und zumindest eine Messstelle an einer zweiten, der ersten Seite gegenüberliegenden Seite, insbesondere der Rückseite, des Konstruktionselementes angeordnet ist.

Gemäß der Erfindung sind die zusätzlich zu den Beschleunigungssensoren vorgesehenen Sensoren - d.h. die Geschwindigkeitssensoren und/oder Lagesensoren - an dem Konstruktionselement (dessen Verformungen erfasst werden sollen) selbst angeordnet. Auf diese Weise werden zusätzlich zu den Beschleunigungsdaten an zwei unterschiedlichen Stellen des Konstruktionselementes zusätzliche Informationen, nämlich Geschwindigkeits- und/oder Lagedaten, ebenfalls an zwei unterschiedlichen Stellen des Konstruktionselementes erhalten. Durch eine Verknüpfung der Beschleunigungsdaten mit den Geschwindigkeits- und/oder Lagedaten kann eine zuverlässige und wesentlich genauere Erfassung der Verformungen des Konstruktionselementes gewährleistet werden. Der Grund dafür liegt darin, dass die Messstellen selbst - je nach Verformung des Konstruktionselements - in ihrer Geschwindigkeit und/oder Lage variieren. Somit kann über diese zusätzlichen - an dem Konstruktionselement selbst - angeordneten Sensoren zusätzliche Information über den aktuellen Verformungszustand erhalten werden.
Die mit der erfindungsgemäßen Messanordnung erfassten Verformungen können sowohl elastische, als auch plastische Verformungen sein. Ebenso kann es sich bei den erfassten Verformungen um kurzeitige, periodische, aperiodische oder sich über einen längeren Zeitraum entwickelnde (z.B. durch Alterungseffekte bedingte) Verformungen handeln. Ihrer Art nach können die erfassten Verformungen insbesondere Verbiegungen des gesamten Konstruktionselementes, Verbiegungen der äußeren Oberfläche, Schwingungen, Vibrationen, Torsionen und/oder Abweichungen von einem Anfangs- und/oder einem bekannten Normalzustand sein. Die Verformungen können in Abhängigkeit verschiedener Parameter ermittelt werden, z.B. in Abhängigkeit der Zeit, des Rotorwinkels, der Temperatur oder anderen Wetterbedingungen, der Windstärke, der Windrichtung, etc.. Die Verformungen können auch in ihrer Art, ihrem zeitlichen Verlauf (z.B. Frequenz, Einschwing- und/oder Abklingcharakteristik) und in ihrer Intensität (Amplitude) erfasst werden.
Bevorzugt ist, wenn die Messanordnung zumindest zwei Beschleunigungssensoren und zumindest zwei Geschwindigkeitssensoren umfasst. Alternativ oder zusätzlich können zumindest zwei Lagesensoren an dem Konstruktionselement vorgesehen sein.
Als Beschleunigungssensoren können auf dem piezoelektrischen Effekt beruhende Sensoren eingesetzt werden. Dabei wird meist die aus der Beschleunigung resultierende Kraft über eine Masse auf ein piezoelektrisches Material übertragen, dessen Stauchung bzw. Dehnung elektronisch erfassbar ist. Selbstverständlich könnten auch optische, insbesondere faseroptische Beschleunigungssensoren eingesetzt werden. Auch wären mechanische Systeme, bei denen eine Masse z.B. auf eine Dehnungs-Messeinrichtung (z.B. DMS) wirkt, denkbar. Die Beschleunigungssensoren sind bevorzugt als mikro-elektro-mechanische Systeme (MEMS) ausgeführt.
Als Geschwindigkeitssensoren können z.B. Winkelgeschwindigkeitssensoren, Kreiselinstrumente oder Gyroskope, eingesetzt werden, bevorzugt ebenfalls in MEMS-Ausführung.
Lagesensoren dienen der Ermittlung der absoluten und/oder relativen Lage und/oder Orientierung der Messstelle. Bevorzugt werden hier (Erd-)Magnetfeldsensoren eingesetzt, da diese eine Orientierung relativ zu dem immer vorhandenen Erdmagnetfeld erlaubt. Dies ist insbesondere bei einer Anwendung der Messanordnung an einem oder mehreren Rotorblättern interessant, da eine Relativposition oder Orientierung zu einer ortsfesten Struktur, wie z.B. dem Turm der Windkraftanlage, ermittelt werden kann, insbesondere der aktuelle Drehwinkel der (Mess-)Stelle, an der der Lagesensor angeordnet ist. Alternativ oder zusätzlich wären auch optische Sensoren oder GPS-Sensoren als Lagesensoren denkbar.

Die Sensoren der Messanordnung sind - drahtgebunden oder über eine Drahtlos-Schnittstelle - mit der Auswerteeinrichtung kommunikationsverbindbar bzw. -verbunden. Diese Verbindbarkeit kann durch eine ständige bzw. kontinuierliche Datenübertragung gekennzeichnet sein oder durch Anforderungssignale der Auswerteeinrichtung oder regelmäßige Datensignale auf Sensorseite realisiert sein.

Ein großer Vorteil der Erfindung liegt darin, dass durch die zusätzlichen Sensoren - Geschwindigkeits- und/oder Lagesensoren - die aktuellen Positionen der (Mess-)Stellen, an denen die Sensoren angeordnet sind, sehr genau bestimmt werden können. Positionsänderungen der Messstellen können im Millimeterbereich erfasst werden, wodurch - anhand der Positionen bzw. Positionsänderungen der Messstellen - auch eine sehr genaue Erfassung der Verformungen erfolgen kann. Je mehr Messstellen vorgesehen werden, desto genauer lässt sich Art und Verlauf einer Verformung bestimmen.

Eine bevorzugte Ausführungsform zeichnet sich dadurch aus, dass der Abstand zwischen benachbarten Messstellen zumindest 1m, bevorzugt zumindest 5m beträgt und/oder dass der Abstand zwischen benachbarten Messstellen höchstens 20m, bevorzugt höchstens 10m beträgt. Diese Abstände sind insbesondere im Hinblick auf einzelne Rotorblätter, deren Länge im Bereich von mehreren 10m (z.B. 50m) liegt, bevorzugte Abstände. Generell hat sich nachfolgende, auf Relativangaben basierende Ausführungsform bewährt, die auch auf längere Konstruktionselemente (Turm) und kürzere Konstruktionselemente (Gondel) bevorzugt anwendbar ist.

Eine solche bevorzugte Ausführungsform zeichnet sich dadurch aus, dass der Abstand zwischen benachbarten Messstellen zumindest 2%, bevorzugt zumindest 5% der Längserstreckung, d.h. der Gesamtlänge, des (zu überwachenden) Konstruktionselementes beträgt und/oder dass der Abstand zwischen benachbarten Messstellen höchstens 40%, vorzugsweise höchstens 20%, besonders bevorzugt höchstens 10%, der Längserstreckung des (zu überwachenden) Konstruktionselementes beträgt.

Die Erfindung zeichnet sich dadurch aus, dass das Konstruktionselement ein Rotorblatt einer Windkraftanlage ist. Diese Konstruktionselemente sind besonders starken Verformungen ausgesetzt. Deren Kenntnis erlaubt nicht nur eine optimale Steuerung der Windkraftanlage, sondern lässt Rückschlüsse auf Schäden, altersbedingte (Verschleiß-)Erscheinungen, besondere Wetterbedingungen (z.B. Eisbildung an den Konstruktionselementen), etc. zu.

Eine bevorzugte Ausführungsform zeichnet sich dadurch aus, dass die zumindest zwei Geschwindigkeitssensoren und/oder die zumindest zwei Lagesensoren an dem Konstruktionselement derart angeordnet sind, dass die zumindest zwei Messstellen, die jeweils zumindest einen Beschleunigungssensor aufweisen, zusätzlich jeweils zumindest einen Geschwindigkeitssensor und/oder zumindest einen Lagesensor aufweisen. Mit anderen Worten: Die Geschwindigkeits- und/oder Lagesensoren sind jeweils an denselben Positionen angeordnet wie die Beschleunigungssensoren, d.h. die Messstellen umfassen jeweils zumindest einen Beschleunigungssensor und zumindest einen Geschwindigkeits- und/oder Lagesensor. Der Ausdruck "dieselbe Position" umfasst selbstverständlich die Möglichkeit, dass die zu einer Messstelle gehörigen Sensoren auch nebeneinander oder übereinander angeordnet sein können und auch einen geringen Abstand voneinander haben können. Jedoch ist ein solcher Abstand sehr viel kleiner im Vergleich zur Erstreckung des Konstruktionselements. Eine besonders bevorzugte Ausführungsform liegt darin, dass die Messstellen jeweils zumindest drei Sensoren aufweisen, nämlich einen Beschleunigungssensor, einen (Winkel-)Geschwindigkeitssensor und einen Lagesensor. Dadurch können Informationen auf allen zeitlichen Ebenen erhalten werden.

Die Erfindung zeichnet sich dadurch aus, dass die Messanordnung zumindest drei, vorzugsweise zumindest fünf, an dem Konstruktionselement angeordnete Messstellen, die in Richtung der Längserstreckung des Konstruktionselementes voneinander beabstandet sind und jeweils zumindest einen Beschleunigungssensor aufweisen, umfasst, wobei die Messstellen jeweils - zusätzlich zu dem Beschleunigungssensor - zumindest einen Geschwindigkeitssensor und/oder zumindest einen Lagesensor aufweisen. Durch Vorsehen mehrerer voneinander beabstandeter Messstellen kann insbesondere ein genauer Biegeverlauf, z.B. entlang des Turmes oder entlang der Längserstreckung des Rotorblattes, ermittelt werden, wodurch ähnliche, aber in ihrer Art doch verschiedene (und z.B. durch unterschiedliche Ursachen bedingte) Verformungszustände oder -verläufe zuverlässig unterschieden werden können.

Eine bevorzugte Ausführungsform zeichnet sich dadurch aus, dass der Abstand zwischen einem Beschleunigungssensor und einem zur selben Messstelle gehörigen Geschwindigkeitssensor und/oder Lagesensor höchstens 5cm, bevorzugt höchstens 5mm, beträgt. Dadurch lässt sich besonders genau die Position der Messstellen definieren und aus den Sensordaten bestimmen. In weiterer Folge können aus den Positionsdaten mehrerer Messstellen die Verformungen des Konstruktionselementes genau bestimmt werden und sogar ein Biegeverlauf ermittelt werden.

Die Erfindung zeichnet sich dadurch aus, dass zumindest eine, vorzugsweise zumindest zwei, der Messstellen im Bereich der Rotorblattspitze und/oder in einem Abstand von der Rotorblattspitze, der höchstens so groß ist wie 20% der Gesamtlänge des Rotorblattes, angeordnet ist/sind. Durch die Anordnung der Messstellen in der äußeren Hälfte des Rotorblattes werden wichtige Informationen für jene Stellen des Rotorblattes erhalten, die besonders starken Beschleunigungen und Positionsänderungen unterworfen sind.

Eine bevorzugte Ausführungsform zeichnet sich dadurch aus, dass zumindest eine Messstelle abseits der Verbindungsgeraden zwischen den äußersten Messstellen der Messanordnung, vorzugsweise zwischen der Messstelle, die der Rotorblattwurzel am nächsten liegt, und der Messstelle, die der Rotorblattspitze am nächsten liegt, angeordnet ist, wobei vorzugsweise der Normalabstand von der Verbindungsgeraden zumindest 20cm, vorzugsweise zumindest 50cm beträgt. Diese Normalabstände sind insbesondere im Hinblick auf einzelne Rotorblätter, deren Länge im Bereich von mehreren 10m (z.B. 50m) liegt, bevorzugte Abstände. Generell hat sich nachfolgende, auf Relativangaben basierende Ausführungsform bewährt, die auch auf längere bzw. größerer Konstruktionselemente (Turm) und kürzere bzw. kleinere Konstruktionselemente (Gondel) bevorzugt anwendbar ist.

Eine solche bevorzugte Ausführungsform zeichnet sich dadurch aus, dass der besagte Normalabstand von der Verbindungsgeraden zumindest 0,5%, bevorzugt zumindest 1% der Längserstreckung, d.h. der Gesamtlänge, des (zu überwachenden) Konstruktionselementes beträgt.

Eine Ausführungsform zeichnet sich dadurch aus, dass zumindest eine Messstelle an einer ersten Seite, insbesondere der Vorderseite, des Konstruktionselementes und zumindest eine Messstelle an einer zweiten, der ersten Seite gegenüberliegenden Seite, insbesondere der Rückseite, des Konstruktionselementes angeordnet ist.

Mittels der letzten drei Ausführungsformen können nicht nur Biegeverläufe entlang einer Längserstreckung erfasst werden, sondern auch komplexe 3-dimensionale Verformungen einschließlich Torsionen und 3-dimensionale Schwingungsmoden detektiert und als solche erkannt werden.

Eine bevorzugte Ausführungsform zeichnet sich dadurch aus, dass die Beschleunigungssensoren jeweils zur Erfassung der Beschleunigung in 3 Raumrichtungen ausgebildet sind. Wie bereits erwähnt lassen sich durch eine Messung in 3 Dimensionen besonders aufschlussreiche Daten generieren, wobei ähnliche, aber z.B. von ursächlich verschiedene Verformungsmuster als solche identifizieren. Die gilt auch für die Erfassung der Geschwindigkeit und/oder Lage bzw. Orientierung.

Eine bevorzugte Ausführungsform zeichnet sich dadurch aus, dass die Geschwindigkeitssensoren jeweils zur Erfassung der Geschwindigkeit in 3 Raumrichtungen ausgebildet sind und/oder dass die Lagesensoren zur Erfassung der Lage in 3 Raumrichtungen ausgebildet sind.

Eine bevorzugte Ausführungsform zeichnet sich dadurch aus, dass der Beschleunigungssensor einer Messstelle zusammen mit einem zur selben Messstelle gehörigen Geschwindigkeitssensor und/oder einem zur selben Messtelle gehörigen Lagesensor in einer (an dem Konstruktionselement angebrachten) Messeinheit integriert ist und/oder in einer gemeinsamen Umhausung untergebracht ist. Bevorzugt ist, wenn die Messeinheit eine flächige Basis, welche die Sensoren trägt, aufweist. Die flächige Basis kann durch ein folienartiges und/oder biegsames Material gebildet sein. Weiters kann die flächige Basis zusätzliche funktionelle Elemente tragen, wie z.B. eine mit den Sensoren verbundene Drahtlos-Schnittstelle zur Übertragung der Sensordaten an eine (zentrale) Auswerteeinheit und/oder eine Energieumwandlungseinrichtung, vorzugsweise in Miniaturform, zur Versorgung der Sensoren mit (elektrischer) Energie. Die flächige Basis ist vorzugsweise an die Oberfläche des (zu überwachenden) Konstruktionselementes der Windkraftanlage geklebt.

Die von der Messeinheit eingenommene Fläche beträgt vorzugsweise höchstens 100cm$^2$. Die maximale Dicke der Messeinheit beträgt vorzugsweise höchstens 5mm. Das Gewicht der Messeinheit beträgt vorzugsweise höchstens 200 Gramm, besonders bevorzugt höchstens 100 Gramm.

Durch die platzsparende und gewichtsarme Ausführung der Messstellen wird gewährleistet, dass das Verhalten des Konstruktionselementes durch die Sensoren nicht beeinflusst wird. Durch drahtlose Kommunikation zwischen den Sensoren und einer (zentralen) Auswerteeinrichtung, kann weiter Gewicht eingespart werden, welches sonst durch Kabelverbindungen eine unerwünschte Beeinflussung des Schwingungs- und Vibrationsverhaltens des Konstruktionselementes verursachen würde.

Eine bevorzugte Ausführungsform zeichnet sich dadurch aus, dass die Beschleunigungssensoren und/oder die Geschwindigkeitssensoren und/oder die Lagesensoren an einer Außenfläche des Rotorblattes angeordnet, vorzugsweise angeklebt, sind. Dies erleichtert nicht nur die Anbringung der Messstellen bzw. der Sensoren, sondern ermöglicht überhaupt erst deren nachträgliche Installation. Außerdem geben die Verformungen/Verbiegungen der Oberfläche eines Konstruktionselementes besonders aufschlussreiche Informationen über den aktuellen (Schwingungs-)Zustand des Konstruktionselementes.

Eine bevorzugte Ausführungsform zeichnet sich dadurch aus, dass die Messstellen und/oder die die Messstellen bildenden Sensoren energieautark sind und/oder jeweils mit zumindest einer lokalen Energieumwandlungseinrichtung, welche vorzugsweise mechanische Energie, chemische Energie, Wärmeenergie und/oder Licht in elektrische Energie umwandelt, insbesondere einer Photovoltaikeinrichtung, verbunden sind. Dadurch erspart man sich teure und gewichtserhöhende Verbindungskabel, die zudem noch im Inneren des Konstruktionselementes verlegt und fixiert werden müssten. Jede Messstelle ist idealerweise lokal versorgt und damit für sich gesehen autark. Lediglich die Datenverbindung, die ebenfalls drahtlos ausgebildet sein kann, stellt eine Verbindung zur (zentralen) Auswerteeinrichtung dar.

Eine bevorzugte Ausführungsform zeichnet sich dadurch aus, dass die Beschleunigungssensoren und/oder die Geschwindigkeitssensoren und/oder die Lagesensoren als mikro-elektro-mechanische Systeme (MEMS) ausgebildet sind. Wir bereits erwähnt sind solche Sensorsysteme nicht nur zuverlässig und langlebig, sondern auch gewichtsarm, platzsparend und leicht anbringbar. Außerdem kann dadurch die Dimensionierung der Messstelle sehr klein sein, wodurch wiederum deren Positionsbestimmung und die damit verbundene Genauigkeit verbessert werden kann.

Eine besonders vorteilhafte Ausführungsform betrifft eine Messanordnung zur Erfassung von Verformungen, insbesondere Verbiegungen der äußeren Oberfläche, eines Konstruktionselementes einer Windkraftanlage, wobei das Konstruktionselement ein Rotorblatt der Windkraftanlage ist, umfassend zumindest drei, vorzugsweise zumindest fünf, an dem Konstruktionselement angeordnete Messstellen, die in Richtung der Längserstreckung, des Konstruktionselementes voneinander beabstandet sind und jeweils zumindest einen Beschleunigungssensor aufweisen, wobei die Beschleunigungssensoren - vorzugsweise über eine Drahtlos-Schnittstelle - mit einer Auswerteeinrichtung kommunikationsverbindbar sind,

wobei die Messanordnung zumindest zwei, an dem Konstruktionselement angeordnete und in Richtung der Längserstreckung, des Konstruktionselementes voneinander beabstandete Geschwindigkeitssensoren, insbesondere Winkelgeschwindigkeitssensoren, und/oder zumindest zwei, an dem Konstruktionselement angeordnete und in Richtung der Längserstreckung, des Konstruktionselementes voneinander beabstandete Lagesensoren, insbesondere Magnetfeldsensoren, aufweist,
wobei die Messstellen jeweils - zusätzlich zu dem Beschleunigungssensor - zumindest einen Geschwindigkeitssensor und/oder zumindest einen Lagesensor aufweisen und
wobei die Geschwindigkeitssensoren und/oder die Lagesensoren mit der Auswerteeinrichtung - vorzugsweise über eine Drahtlos-Schnittstelle - kommunikationsverbindbar sind,
und wobei zumindest eine, vorzugsweise zumindest zwei, der Messstellen im Bereich der Rotorblattspitze und/oder in einem Abstand von der Rotorblattspitze, der höchstens so groß ist wie 20% der Gesamtlänge des Rotorblattes, angeordnet ist/sind,
und wobei
zumindest eine Messstelle abseits der Verbindungsgeraden zwischen den äußersten Messstellen der Messanordnung, vorzugsweise zwischen der Messstelle, die der Rotorblattwurzel am nächsten liegt, und der Messstelle, die der Rotorblattspitze am nächsten liegt, angeordnet ist, wobei vorzugsweise der Normalabstand von der Verbindungsgeraden zumindest 20cm, vorzugsweise zumindest 50cm, beträgt, und/oder zumindest 0,5%, bevorzugt zumindest 1% der Längserstreckung des Konstruktionselementes beträgt,
und/oder zumindest eine Messstelle an einer ersten Seite, insbesondere der Vorderseite, des Konstruktionselementes und zumindest eine Messstelle an einer zweiten, der ersten Seite gegenüberliegenden Seite, insbesondere der Rückseite, des Konstruktionselementes angeordnet ist.

Durch diese Merkmale - insbesondere die Kombination der Anordnung einer oder mehrerer Messstellen in der Nähe der Rotorblattspitze einerseits und einer Anordnung, bei der zumindest eine Messstelle nicht auf einer Verbindungsgeraden zwischen anderen Messstellen liegt bzw. überhaupt an einer anderen Seite des Konstruktionselementes angeordnet ist, - wird eine besonders genaue Bestimmung der Verformungen ermöglicht. Versuche haben gezeigt, dass durch eine solche Kombination die Genauigkeit und Verwertbarkeit der erhaltenen Verformungsdaten erheblich erhöht werden kann.

Eine weitere Ausführungsform zeichnet sich dadurch aus, dass die Auswerteeinrichtung ausgebildet ist, die Beschleunigungsdaten der Beschleunigungssensoren mit den Geschwindigkeitsdaten der Geschwindigkeitssensoren und/oder Lagedaten der Lagesensoren zu verknüpfen und daraus Verformungen des Konstruktionselementes zu ermitteln. Wie bereits oben erwähnt kann durch eine Verknüpfung der Beschleunigungsdaten mit den Geschwindigkeits- und/oder Lagedaten eine zuverlässige und wesentlich genauere Erfassung der Verformungen des Konstruktionselementes gewährleistet werden.

Eine weitere Ausführungsform zeichnet sich dadurch aus, dass die Sensoren der verschiedenen (voneinander beabstandeten) Messstellen der Messanordnung durch die Auswerteeinrichtung - vorzugsweise mittels eines von der Auswerteeinrichtung an die Sensoren gesendeten Signals, insbesondere in Form eines Datenpakets - zeitlich synchronisierbar sind, insbesondere hinsichtlich des Zeitpunktes der von den jeweiligen Sensoren durchgeführten Messung und/oder des Zeitpunktes der Übertragung der Sensordaten von den Sensoren an die Auswerteeinrichtung. Auf diese Weise kann - insbesondere im Zusammenhang mit einer Drahtlos-Übertragung zwischen Auswerteeinrichtung und Sensoren - gewährleistet werden, dass die Messungen zweitgleich, jedenfalls aber mit nur minimalem Zeitunterschied, durchgeführt werden. Aufgrund der hohen Dynamik, die bei Windkraftanlagen auftritt, kann durch diese Maßnahme die Genauigkeit der Ermittlung der Verformungen und anderer Parameter mittels der Sensoren erheblich gesteigert werden.

Eine weitere Ausführungsform zeichnet sich dadurch aus, dass die Auswerteeinrichtung ausgebildet ist, an die Sensoren der Messstellen ein Signal zu übermitteln, durch welches die Sensoren der verschiedenen (voneinander beabstandeten) Messstellen zeitlich synchronisiert werden, sodass die derart synchronisierten Sensoren innerhalb eines gemeinsamen Zeitfensters, welches vorzugsweise höchstens $500\mu s$, bevorzugt höchstens $100\mu s$, besonders bevorzugt höchstens $50\mu s$, beträgt, jeweils zumindest eine Messung durchführen. Besonders bevorzugt ist hier, wenn das Zeitfenster, in dem die zu verschiedenen (voneinander beabstandeten) Messstellen gehörigen Messstellen die Messung durchführen, ca. $100\mu s$ oder weniger beträgt.

Eine weitere Ausführungsform zeichnet sich dadurch aus, dass die Auswerteeinrichtung ausgebildet ist, aus den Sensordaten der Sensoren, insbesondere durch Verknüpfung der Beschleunigungsdaten der Beschleunigungssensoren mit den Geschwindigkeitsdaten der Geschwindigkeitssensoren und/oder Lagedaten der Lagesensoren, zumindest eine, vorzugsweise mehrere, der folgenden Größen und/oder Eigenschaften zu ermitteln:

- den absoluten Pitchwinkel zumindest eines Rotorblattes und/oder
- den relativen Pitchwinkel zumindest zweier Rotorblätter zueinander und/oder
- die Torsion zumindest eines Rotorblattes und/oder zumindest zweier Rotorblätter zu-einander und/oder
- die auf zumindest ein Rotorblatt einwirkende Last und/oder einwirkenden Lastzyklus und/oder
- eine Quelle für erhöhte Lärmemission und/oder
- ein Frühzeichen eines Schadens oder fehlerhaften Regelungszustands der Windkraft-anlage und/oder
- die Art, Stärke, Dynamik und/oder Richtung von Winden und/oder
- eine Änderung des Schwingungsverhaltens des Konstruktionselementes und/oder
- einen Rotorblattschaden,

wobei vorzugsweise die Ermittlung der Größe(n) und/oder Eigenschaften(en) einen Vergleich zwischen aktuellen (Sensor-)Daten und historischen (Sensor-)Daten und/oder einen Vergleich zwischen den (Sensor-)Daten eines Rotorblattes und den (Sensor-)Daten zumindest eines anderen Rotorblattes umfasst.

Auf diese Weise können wichtige Informationen für den zuverlässigen und langfristigen Betrieb einer Windkraftanlage gesammelt werden. Zudem kann die Effizienz der Windkraftanlage gesteigert und deren Lebensdauer erhöht werden.

Eine weitere Ausführungsform zeichnet sich dadurch aus, dass die Auswerteeinrichtung ausgebildet ist, die Verformungen und/oder die Größen und/oder Eigenschaften aus jenen Sensordaten zu ermitteln, die durch die synchronisierten Sensoren innerhalb eines gemeinsamen Zeitfensters, welches vorzugsweise höchstens $500\mu s$, bevorzugt höchstens $100\mu s$, besonders bevorzugt höchstens $50\mu s$, beträgt, aufgenommen wurden. Wie bereits erwähnt ergeben zeitlich möglichste eng beieinanderliegende Messungen der beteiligten Sensoren hohe Genauigkeit und hohe Aussagekraft der aus den Sensordaten berechneten Eigenschaften/Parameter.

Das Ziel wird auch erreicht mit einer Windkraftanlage umfassend einen Rotor mit zumindest zwei, vorzugsweise drei, Rotorblättern und zumindest eine Messanordnung zur Erfassung von Verformungen zumindest eines Konstruktionselementes der Windkraftanlage, wobei das Konstruktionselement ein Rotorblatt der Windkraftanlage ist, und eine Steuereinrichtung, wobei die zumindest eine Messanordnung erfindungsgemäß ausgebildet ist.

Eine bevorzugte Ausführungsform zeichnet sich dadurch aus, dass für zumindest zwei Rotorblätter der Windkraftanlage, insbesondere für jedes Rotorblatt des Rotors eine erfindungsgemäße Messanordnung vorgesehen ist, wobei vorzugsweise die Sensoren der Messanordnungen mit einer zentralen Auswerteeinrichtung - vorzugsweise über eine Drahtlos-Schnittstelle - kommunikationsverbunden sind.

Eine bevorzugte Ausführungsform zeichnet sich dadurch aus, dass die Steuereinrichtung eingerichtet ist, um in Abhängigkeit der von den Messstellen der Messanordnung generierten Sensorsignale die Windkraftanlage zu steuern, insbesondere den Rotor in Bezug auf die Windrichtung auszurichten und/oder den Pitch der Rotorblätter einzustellen. Auf diese Weise kann der Betriebszustand hinsichtlich seiner Einstellungen und Justierungen optimiert werden, wodurch nicht nur die Energieausbeute erhöht, sondern auch die Lebensdauer der Windkraftanlage bzw. der einzelnen Konstruktionselemente erhöht werden kann. Ein Beispiel ist die Windscherung, die ein spezielles Verformungsmuster bewirkt. Durch Erkennung eines solchen Verformungsmuster kann auch dessen Ursache ermittelt werden. Die Steuereinrichtung der Windkraftanlage in Abhängigkeit der detektierten Verformungsmuster / Ursachen entsprechende Einstellungen der Windkraftanlage vornehmen, die Windkraftanlage in einen deaktivierten Zustand bringen oder eine Störungsmeldung bzw. einen Alarm generieren und versenden.

Das Ziel wird auch erreicht mit einem Verfahren zum Betreiben einer Windkraftanlage, die einen Rotor mit Rotorblättern und zumindest eine Messanordnung zur Erfassung von Verformungen, insbesondere Verbiegungen der äußeren Oberfläche, eines Konstruktionselementes der Windkraftanlage, welches Konstruktionselement ein Rotorblatt ist, aufweist, wobei mittels der zumindest einen Messanordnung an zumindest einem Konstruktionselement, vorzugsweise jeweils an allen Rotorblättern des Rotors, an zumindest zwei an dem Rotorblatt angeordneten Messstellen, die in Richtung einer Erstreckung, vorzugsweise der Längserstreckung des Rotorblattes voneinander beabstandet sind, Beschleunigungsdaten erfasst werden, dadurch gekennzeichnet, dass an zumindest zwei, an dem Rotorblatt angeordneten und in Richtung der Längserstreckung des Rotorblattes voneinander beabstandeten Stellen, Geschwindigkeitsdaten und/oder Lagedaten erfasst werden, und dass die Beschleunigungsdaten mit den Geschwindigkeitsdaten und/oder Lagedaten zur Ermittlung der Verformungen des Rotorblattes verknüpft werden, und dass die Messanordnung erfindungsgemäß ausgebildet ist und/oder die Windkraftanlage erfindungsgemäß ausgebildet ist.

Wie bereits erwähnt kann durch eine Verknüpfung von (zeitabhängigen) Beschleunigungsdaten und (zeitabhängigen) Geschwindigkeits- und/oder Lagedaten die Erfassung der Verformungen verbessert, insbesondere deren Genauigkeit erhöht werden. Insbesondere ermöglicht eine solche Verknüpfung, dass die Positionen der Messstellen vorzugsweise allein aus den Daten der Sensoren der Messstellen ermittelt werden können. Es ist daher nicht nötig, die exakte Position der Messstellen im Vorhinein zu kennen. Die Auswerteeinrichtung ist dazu ausgebildet, z.B. aus den Beschleunigungsdaten und Geschwindigkeitsdaten, welche in den meisten Fällen eine Schwingung um einen Null- bzw. Bezugspunkt abbilden, die Positionen der einzelnen Messstellen zu ermitteln. Die jeweilige Abweichung der Messstellen von einer Bezugs- oder Ruheposition, die durch Kalibration vor oder während des Betriebes der Windkraftanlage, ermittelt wird, stellt ein Maß für den aktuellen Verformungsgrad dar.

Eine bevorzugte Ausführungsform zeichnet sich dadurch aus, dass die Geschwindigkeitsdaten und/oder Lagedaten jeweils an denselben Messstellen erfasst werden, an denen die Beschleunigungsdaten erfasst werden. Um Wiederholungen zu vermeiden, wird auf die zu den einzelnen Ausführungsformen der Messanordnung angegebenen Vorteile verwiesen.

Eine bevorzugte Ausführungsform zeichnet sich dadurch aus, dass die Beschleunigungsdaten sowie die Geschwindigkeitsdaten und/oder Lagedaten kontinuierlich erfasst werden, wobei vorzugsweise die Verformungen des Konstruktionselementes ebenfalls kontinuierlich ermittelt werden. Dadurch kann die Dynamik der Verformungen erfasst werden, wodurch die einzelnen Verformungszustände voneinander unterschieden werden können.

Eine bevorzugte Ausführungsform zeichnet sich dadurch aus, dass aus den an einer Messstelle erfassten Beschleunigungsdaten und den an derselben Messstelle erfassten Geschwindigkeitsdaten und/oder Lagedaten die Position der Messstelle ermittelt wird, wobei die ermittelte Position der Messstelle eine Relativposition zu einem Bezugspunkt, insbesondere der Rotorblattwurzel und/oder der Rotorachse, und/oder eine absolute Position ist. Die Position kann z.B. durch Integration der Beschleunigungsdaten und/oder Geschwindigkeitsdaten erfolgen, wobei die zusätzliche Information über eine Lage, z.B. eine Orientierung, auch eine absolute Position ermittelbar ist. Beispielsweise kann mittels Erdmagnetfeldsensoren als Lagesensoren die Orientierung der Messstellen, d.h. der aktuelle Drehwinkel bestimmt werden, da der Magnetfeldsensor registriert, ob sich eine Messstelle gerade nach unten oder nach oben bewegt.

Eine bevorzugte Ausführungsform zeichnet sich dadurch aus, dass aus den ermittelten Positionen mehrerer Messstellen die Verformung des Konstruktionselementes, insbesondere ein Biegeverlauf entlang einer Erstreckung, vorzugsweise der Längserstreckung des Konstruktionselementes, ermittelt wird, wobei vorzugsweise die Verformung des Konstruktionselementes in 3 Dimensionen ermittelt wird.

Eine bevorzugte Ausführungsform zeichnet sich dadurch aus, dass aus den ermittelten Beschleunigungsdaten sowie den Geschwindigkeitsdaten und/oder Lagedaten die Positionen der Messstellen in Abhängigkeit der Zeit ermittelt werden und/oder dass die Verformungen des Konstruktionselementes in Abhängigkeit der Zeit und/oder in Abhängigkeit des Rotationswinkels des Rotors ermittelt werden.

Eine bevorzugte Ausführungsform zeichnet sich dadurch aus, dass in Abhängigkeit der Beschleunigungsdaten sowie der Geschwindigkeitsdaten und/oder Lagedaten die Windkraftanlage gesteuert wird, insbesondere der Rotor in Bezug auf die Windrichtung ausgerichtet und/oder der Pitch der Rotorblätter eingestellt wird.

Eine bevorzugte Ausführungsform zeichnet sich dadurch aus, dass die Steuerung der Windkraftanlage derart erfolgt, dass die Einstellung des Pitchs eines oder mehrerer Rotorblätter in Abhängigkeit des Rotationswinkels des Rotors erfolgt.

Eine bevorzugte Ausführungsform zeichnet sich dadurch aus, dass die Anpassung der Einstellungen der Windkraftanlage, insbesondere die Anpassung der Orientierung des Rotors und/oder die Anpassung des Pitchs eines oder mehrerer Rotorblätter in Abhängigkeit der erfassten Beschleunigungsdaten, Geschwindigkeitsdaten und/oder Lagedaten in Echtzeit erfolgt. Dies führt zu einem optimalen Betrieb, wenn Verformungszustände sofort identifiziert werden und in unmittelbarer Folge - verzögert lediglich durch die Latenz der Sensoren, der Datenübermittlung, der Datenverarbeitung (in der Auswerteeinrichtung bzw. Steuereinrichtung) und Generierung und Umsetzung der Steuerbefehle - und eine entsprechende Anpassung der Einstellungen erfolgt.

Eine bevorzugte Ausführungsform zeichnet sich dadurch aus, dass ein Vergleich der ermittelten Beschleunigungen, Geschwindigkeiten und/oder Lagen der einzelnen Messstellen und/oder der ermittelten Verformungen des Rotorblattes mit einem (Verformungs-)Modell durchgeführt wird, wobei vorzugsweise Abweichungen von dem Modell zur Erkennung von Verformungsmustern herangezogen werden. Beim Verformungsmodell kann es sich z.B. um vorgegebene, (in einer Datenbank) hinterlegte und/oder theoretisch errechnete Modelle handeln, die z.B. die Hauptverformungsmuster eines Konstruktionselementes (also Muster, die üblicherweise im Betrieb einer Windkraftanlage auftreten) darstellen.

Eine bevorzugte Ausführungsform zeichnet sich dadurch aus, dass die ermittelten Verformungen mit einer Anzahl hinterlegter Verformungsmuster, welche insbesondere Biegeformen und/oder zeitliche Abhängigkeiten umfassen können, verglichen werden, wobei vorzugsweise jenes Verformungsmuster ausgewählt wird, welches die geringsten Abweichungen von den ermittelten Verformungen aufweist. Die Verformungsmuster können jeden Aspekt einer Verformung, insbesondere zeitliche und räumliche Abhängigkeiten, Frequenz und/oder Intensität einer Schwingung oder Vibration, Abhängigkeiten von einem Parameter, wie z.B. des Drehwinkels und/oder der Drehgeschwindigkeit des Rotors, einer Pitcheinstellung, der Windstärke, etc..

Eine bevorzugte Ausführungsform zeichnet sich dadurch aus, dass den hinterlegten Verformungsmustern jeweils zumindest eine vorgegebene Einstellung der Windkraftanlage zugeordnet ist und dass die dem ausgewählten Verformungsmuster zugeordnete Einstellung, insbesondere eine bestimmte Ausrichtung des Rotors in Bezug auf die Windrichtung und/oder eine Einstellung des Pitchs der Rotorblätter, durchgeführt und/oder beibehalten wird. Auf diese Weise können für bestimmte Bedingungen unmittelbar - vorzugsweise in Echtzeit - optimale Einstellungen der Windkraftanlage erfolgen.

Eine bevorzugte Ausführungsform zeichnet sich dadurch aus, dass in der Steuereinrichtung ein selbstlernender Algorithmus hinterlegt ist, welcher dazu ausgebildet ist, anhand eines oder mehrerer (mittels der Sensordaten ermittelter) Verformungsmuster, vorzugsweise anhand in zeitlichen Abständen ermittelten Verformungsmuster, Einstellungen, insbesondere Einstellungsparameter, der Windkraftanlage anzupassen und/oder beizubehalten, wobei vorzugsweise der selbstlernende Algorithmus auf hinterlegte Referenzdaten mit Verformungsmustern und/oder Einstellungen zurückgreift.

Die Vorteile der nachfolgenden Ausführungsformen wurden bereits im Zusammenhang mit der Messanordnung bzw. Windkraftanlage beschrieben und sind gleichermaßen auf das Verfahren übertragbar.

Eine weitere Ausführungsform zeichnet sich dadurch aus, dass die Beschleunigungsdaten der Beschleunigungssensoren mit den Geschwindigkeitsdaten der Geschwindigkeitssensoren und/oder Lagedaten der Lagesensoren durch eine Auswerteeinrichtung, die mit den Sensoren kommunikationsverbunden ist, verknüpft werden und die Auswerteeinrichtung daraus Verformungen des Konstruktionselementes ermittelt.

Eine weitere Ausführungsform zeichnet sich dadurch aus, dass die Sensoren der verschiedenen Messstellen der Messanordnung durch die Auswerteeinrichtung - vorzugsweise mittels eines von der Auswerteeinrichtung an die Sensoren gesendeten Signals, insbesondere in Form eines Datenpakets - zeitlich synchronisiert werden, insbesondere hinsichtlich des Zeitpunktes der von den jeweiligen Sensoren durchgeführten Messung und/oder des Zeitpunktes der Übertragung der Sensor-daten von den Sensoren an die Auswerteeinrichtung.

Eine weitere Ausführungsform zeichnet sich dadurch aus, dass die Auswerteeinrichtung an die Sensoren der Messstellen ein Signal übermittelt, durch welches die Sensoren der verschiedenen Messstellen zeitlich synchronisiert werden, sodass die derart synchronisierten Sensoren innerhalb eines gemeinsamen Zeitfensters, welches vorzugsweise höchstens 500μs, bevorzugt höchstens 100μs, besonders bevorzugt höchstens 50μs, beträgt, jeweils zumindest eine Messung durchführen.

Eine weitere Ausführungsform zeichnet sich dadurch aus, dass die Auswerteeinrichtung aus den Sensordaten der Sensoren, insbesondere durch Verknüpfung der Beschleunigungsdaten der Beschleunigungssensoren mit den Geschwindigkeitsdaten der Geschwindigkeitssensoren und/oder Lagedaten der Lagesensoren, zumindest eine, vorzugsweise mehrere, der folgenden Größen und/oder Eigenschaften ermittelt:

- den absoluten Pitchwinkel zumindest eines Rotorblattes und/oder
- den relativen Pitchwinkel zumindest zweier Rotorblätter zueinander und/oder
- die Torsion zumindest eines Rotorblattes und/oder zumindest zweier Rotorblätter zu-einander und/oder
- die auf zumindest ein Rotorblatt einwirkende Last und/oder einwirkenden Lastzyklus und/oder
- eine Quelle für erhöhte Lärmemission und/oder
- ein Frühzeichen eines Schadens oder fehlerhaften Regelungszustands der Windkraft-anlage und/oder
- die Art, Stärke, Dynamik und/oder Richtung von Winden und/oder
- eine Änderung des Schwingungsverhaltens des Konstruktionselementes und/oder
- einen Rotorblattschaden,

wobei vorzugsweise die Ermittlung der Größe(n) und/oder Eigenschaften(en) einen Vergleich zwischen aktuellen Daten und historischen Daten und/oder einen Vergleich zwischen den Daten eines Rotorblattes und den Daten zumindest eines anderen Rotorblattes umfasst.

Eine weitere Ausführungsform zeichnet sich dadurch aus, dass die Auswerteeinrichtung die Verformungen und/oder die Größen und/oder Eigenschaften aus jenen Sensordaten ermittelt, die durch die synchronisierten Sensoren innerhalb eines gemeinsamen Zeitfensters, welches vorzugsweise höchstens 500μs, bevorzugt höchstens 100μs, besonders bevorzugt höchstens 50μs, beträgt, aufgenommen wurden.

Zum besseren Verständnis der Erfindung wird diese anhand der nachfolgenden Figuren näher erläutert.

Es zeigen jeweils in stark vereinfachter, schematischer Darstellung:

Fig. 1     eine Windkraftanlage mit erfindungsgemäßen Messanordnungen an den Rotorblättern

Fig. 2     eine Windkraftanlage mit Messanordnungen an Gondel, Turm und Fundament

Fig. 3     eine Messstelle im Detail

Fig. 4    eine Ausführungsform einer Messstelle

Fig. 5    in schematischer Ansicht die Auswertung der Sensordaten einzelner Messstellen

Fig. 6    drei verschiedene Verformungszustände eines Rotorblattes und den effektiven Rotorblattradius entlang einer vollständigen Umdrehung

Fig. 7    die Bestimmung der Verformung aus Beschleunigungs- und Geschwindigkeitsdaten

Fig. 8    eine alternative Messanordnung an einem Rotorblatt

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

FIGURENBESCHREIBUNG

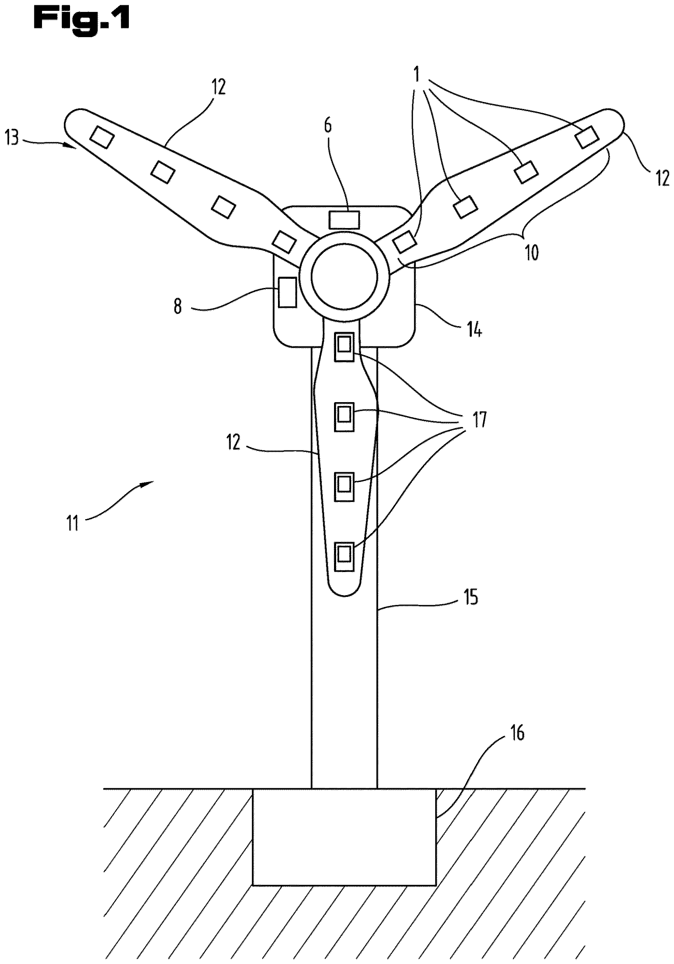

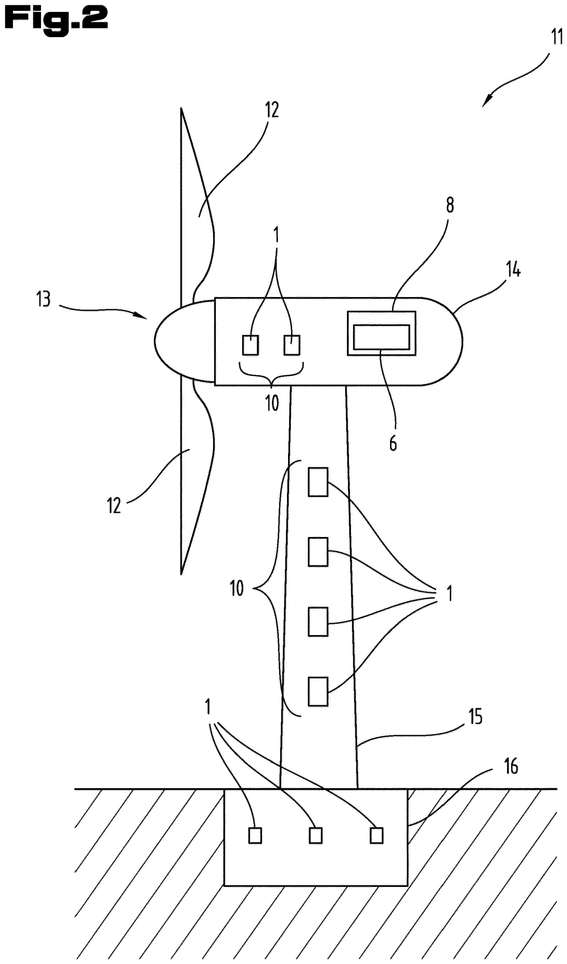

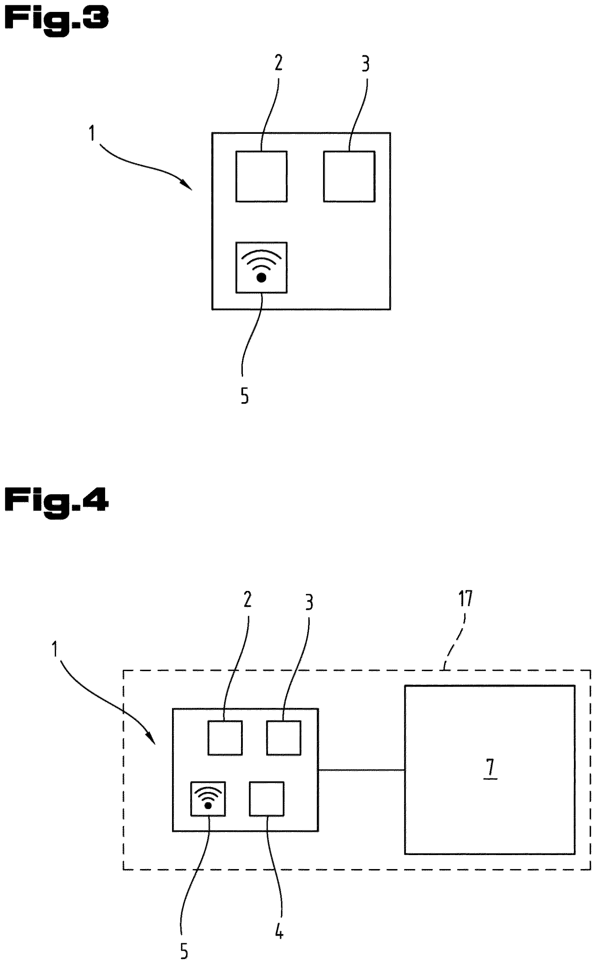

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.
Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.
Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.
Der Ordnung halber sei abschließend darauf hingewiesen, dass zum besseren Verständnis des Aufbaus Elemente teilweise unmaßstäblich und/oder vergrößert und/oder verkleinert dargestellt wurden
Fig. 1 und Fig. 2 zeigen Windkraftanlagen 11, die jeweils mit erfindungsgemäßen Messanordnungen 10 zur Erfassung von Verformungen, insbesondere Verbiegungen der äußeren Oberfläche, eines Konstruktionselementes ausgestattet sind. In Fig. 1 sind die durch einzelne Messstellen 1 gebildete Messanordnungen 10 an den Rotorblättern 12 des Rotors 13 angeordnet. Abweichend von den Merkmalen, durch die die Erfindung definiert ist, sind in Fig. 2 die durch einzelne Messstellen 1 gebildete Messanordnungen 10 an der Gondel 14, am Turm 15 und am Fundament 16 angeordnet. Verschiedenste Kombinationen und Erweiterungen der in Fig. 1 und 2 gezeigten Messanordnungen (auch Weglassungen von Messanordnungen oder einzelnen Messstellen) sind selbstverständlich möglich.
Die erfindungsgemäße Messanordnung umfasst zumindest drei, vorzugsweise zumindest fünf, an dem Konstruktionselement 12 angeordnete Messstellen 1, die in Richtung der Längserstreckung des Konstruktionselementes 12 voneinander beabstandet sind und jeweils zumindest einen Beschleunigungssensor 2 aufweisen (siehe Fig. 3 und 4). Die Beschleunigungssensoren 2 sind - hier über eine Drahtlos-Schnittstelle 5 - mit einer Auswerteeinrichtung 6 kommunikationsverbunden, sodass die Sensordaten an die Auswerteeinrichtung 6 - vorzugsweise unmittelbar nach deren Generierung - übertragen werden können.
Die Auswerteeinrichtung ist bevorzugt eine zentrale Auswerteeinrichtung, die bevorzugt mit mehreren Messanordnungen 10, die jeweils an verschiedenen Konstruktionselementen 12, 14, 15, 16 angeordnet sind, kommuniziert.
Die Auswerteeinrichtung 6 kann in der Steuereinrichtung 8 der Windkraftanlage 11 integriert sein (Fig. 2) oder als gesonderte Einrichtung bzw. Modul vorgesehen sein (Fig. 1).
Die Messanordnung 10 weist - zusätzlich zu den Beschleunigungssensoren 2 - zumindest zwei, an dem Konstruktionselement 12, 14, 15, 16 angeordnete und in Richtung einer Erstreckung, vorzugsweise der Längserstreckung, des Konstruktionselementes 12, 14, 15, 16 voneinander beabstandete Geschwindigkeitssensoren 3, insbesondere Winkelgeschwindigkeitssensoren, auf.

Zusätzlich oder alternativ kann die Messanordnung 10 zumindest zwei, an dem Konstruktionselement 12, 14, 15, 16 angeordnete und in Richtung einer Erstreckung, vorzugsweise der Längserstreckung, des Konstruktionselementes 12, 14, 15, 16 voneinander beabstandete Lagesensoren 4, insbesondere Magnetfeldsensoren, aufweisen.

Die Geschwindigkeitssensoren 3 und/oder die Lagesensoren 4 sind ebenfalls mit der Auswerteeinrichtung 6 - vorzugsweise über eine Drahtlos-Schnittstelle 5 - kommunikationsverbunden.

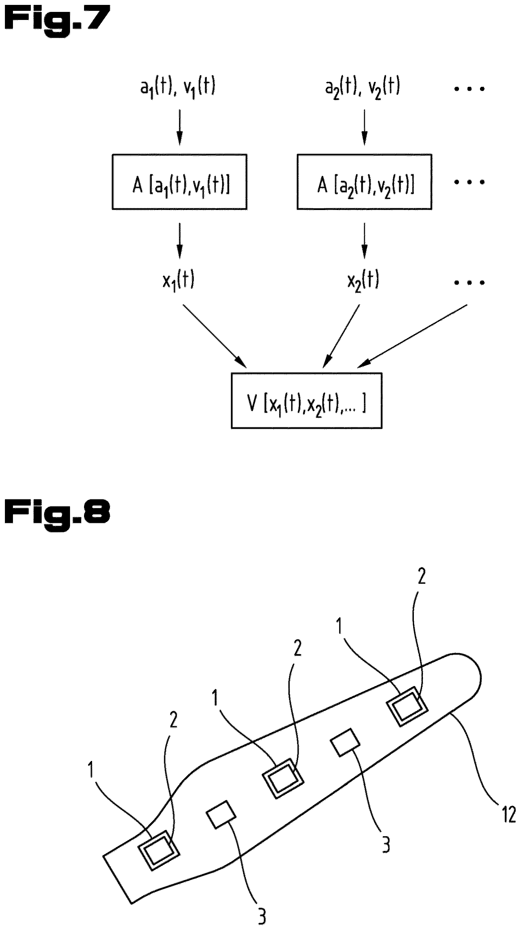

Die Geschwindigkeitssensoren 3 können (ebenso wie die Lagesensoren 4) von den Beschleunigungssensoren 2 beabstandet sein (Fig. 8). Jedoch sind in bevorzugter Ausführung die zusätzlichen Sensoren, d.h. die Geschwindigkeitssensoren 3 und/oder die Lagesensoren 4, zusammen mit den Beschleunigungssensoren jeweils an einer Messstelle 1 zusammengefasst (Fig. 3 und 4 in Zusammenschau mit den Fig. 1 und 2).

Mit anderen Worten: die zumindest zwei Geschwindigkeitssensoren 3 und/oder die zumindest zwei Lagesensoren 4 sind an dem Konstruktionselement 12, 14, 15, 16 derart angeordnet, dass die zumindest zwei Messstellen 1, die jeweils zumindest einen Beschleunigungssensor 2 aufweisen, zusätzlich jeweils zumindest einen Geschwindigkeitssensor 3 und/oder zumindest einen Lagesensor 4 aufweisen (Fig. 3 und 4).

In jedem Fall können - anstelle der oder zusätzlich zu den in Fig. 3 und 8 gezeigten Geschwindigkeitssensoren 3 - auch Lagesensoren vorgesehen sein.

Die Verwendung von (direkt vor Ort aufgenommenen) Beschleunigungsdaten in Kombination mit (direkt vor Ort aufgenommenen) Geschwindigkeits- oder Lagedaten, ermöglicht eine wesentlich genauere Erfassung von Verformungen, zumal Beschleunigungs-, Geschwindigkeits- und Lageinformationen ermöglichen unterschiedliche Zeitskalen aufzulösen.

Die Verformung kann in Form einer Abweichung vom Ruhe- oder Normalzustand, als Dehnung bzw. Stauchung, als (Orts-)Änderung zu einem Referenzpunkt, als Schwingung(-samplitude), in Form einer Krümmung, als ein- oder mehrdimensionale Biegeparameter, als normalisierte Darstellung, als ein- oder mehrdimensionales Verformungsmuster, als Zeitabhängigkeit, etc. erfasst werden und ist in ihrer Bedeutung daher breit auszulegen.

Die Messanordnung 10 umfasst zumindest drei, vorzugsweise zumindest fünf, an dem Konstruktionselement 12, 14, 15, 16 angeordnete Messstellen 1, die in Richtung der Längserstreckung des Konstruktionselementes 12, 14, 15, 16 voneinander beabstandet sind und jeweils zumindest einen Beschleunigungssensor 2 aufweisen. Jede Messstelle 1 ist dabei - zusätzlich zu dem Beschleunigungssensor 2 - mit zumindest einem Geschwindigkeitssensor 3 und/oder zumindest einem Lagesensor 4 ausgestattet. Die Sensordaten sämtlicher Sensoren werden an die (zentrale) Auswerteeinrichtung 6 übertragen.

Der Abstand zwischen einem Beschleunigungssensor 2 und einem zur selben Messstelle 1 gehörigen Geschwindigkeitssensor 3 und/oder Lagesensor 4 soll dabei möglichst höchstens 5cm, bevorzugt höchstens 1cm, besonders bevorzugt höchstens 5mm, betragen.

Bei einem sich drehenden Rotorblatt 12 ist zumindest eine, vorzugsweise zumindest zwei, der Messstellen 1 im Bereich der Rotorblattspitze und/oder in einem Abstand von der Rotorblattspitze, der höchstens so groß ist wie 20%, der Gesamtlänge des Rotorblattes 12, angeordnet (siehe Fig. 1).

Bevorzugt ist zudem, wenn zumindest eine Messstelle 1 abseits der Verbindungsgeraden zwischen den äußersten Messstellen 1 der Messanordnung 10, vorzugsweise zwischen der Messstelle 1, die der Rotorblattwurzel am nächsten liegt, und der Messstelle 1, die der Rotorblattspitze am nächsten liegt, angeordnet. Der Normalabstand von der Verbindungsgeraden beträgt vorzugsweise zumindest 20cm, vorzugsweise zumindest 50cm.

Ebenso kann zumindest eine Messstelle 1 an einer ersten Seite, insbesondere der Vorderseite, des Konstruktionselementes 12, 14, 15, 16 und zumindest eine Messstelle 1 an einer zweiten, der ersten Seite gegenüberliegenden Seite, insbesondere der Rückseite, des Konstruktionselementes 12, 14, 15, 16 angeordnet sein.

Um eine Verformung bzw. ein Verformungsmuster genaue charakterisieren zu können, sind die Beschleunigungssensoren 2 jeweils zur Erfassung der Beschleunigung in 3 Raumrichtungen ausgebildet. Dasselbe gilt auch für die Geschwindigkeitssensoren 3 und/oder die Lagesensoren 4. Zu diesem Zweck kann der jeweilige Sensor 2, 3, 4 drei (Unter)Einheiten aufweisen. Denkbar wäre jedoch auch eine einzige Einheit, die ausgebildet ist, in allen drei Raumrichtungen zu messen.

Fig. 4 zeigt, dass der Beschleunigungssensor 2 einer Messstelle 1 zusammen mit einem zur selben Messstelle 1 gehörigen Geschwindigkeitssensor 3 und/oder einem zur selben Messtelle 1 gehörigen Lagesensor 4 in einer Messeinheit 17 integriert und/oder in einer gemeinsamen Umhausung untergebracht sein kann.

Bevorzugt ist, wenn die Messeinheit 17 eine flächige Basis, welche die Sensoren 2, 3, 4 trägt, aufweist. Die flächige Basis kann durch ein folienartiges und/oder biegsames Material gebildet sein. Weiters kann die flächige Basis zusätzliche funktionelle Elemente tragen, wie z.B. eine mit den Sensoren verbundene Drahtlos-Schnittstelle 5 zur Übertragung der Sensordaten an eine (zentrale) Auswerteeinheit 6 und/oder eine Energieumwandlungseinrichtung 7, vorzugsweise in Miniaturform, zur Versorgung der Sensoren 2, 3, 4 und gegebenenfalls der Drahtlosschnittstelle 5 mit (elektrischer) Energie. Die flächige Basis ist vorzugsweise an die Oberfläche des (zu überwachenden) Konstruktionselementes der Windkraftanlage 11 geklebt.

Bevorzugt ist jede Messstelle 1 an einer gesonderten Messeinheit 17 ausgebildet.

Die Beschleunigungssensoren 2 und/oder die Geschwindigkeitssensoren 3 und/oder die Lagesensoren 4 können an einer Außenfläche des Konstruktionselementes 12, 14, 15, 16 angeordnet, vorzugsweise angeklebt, sein (siehe z.B. Fig. 1).

In Fig. 4 ist angedeutet, dass die Messstellen 1 und/oder die die Messstellen 1 bildenden Sensoren 2, 3, 4 energieautark sind und/oder jeweils mit zumindest einer lokalen Energieumwandlungseinrichtung 7, welche vorzugsweise mechanische Energie, chemische Energie, Wärmeenergie und/oder Licht in elektrische Energie umwandelt, insbesondere einer Photovoltaikeinrichtung, verbunden sein können.

Die Beschleunigungssensoren 2 und/oder die Geschwindigkeitssensoren 3 und/oder die Lagesensoren 4 sind bevorzugt als mikro-elektro-mechanische Systeme (MEMS) ausgebildet.

Es kann nun die Windkraftanlage derart ausgebildet sein, dass für zumindest zwei Konstruktionselemente 12, 14, 15, 16 der Windkraftanlage 11, insbesondere für jedes Rotorblatt 12 des Rotors 13 eine erfindungsgemäße Messanordnung 10 vorgesehen ist. Die Sensoren 2, 3, 4 der Messanordnungen 10 sind dabei jeweils mit der zentralen Auswerteeinrichtung 6 - vorzugsweise über eine Drahtlos-Schnittstelle 5 - kommunikationsverbunden.

Die Steuereinrichtung 8 kann nun dazu eingerichtet sein, um in Abhängigkeit der von den Messstellen 1 der Messanordnung 10 generierten Sensorsignale die Windkraftanlage 10 zu steuern, insbesondere den Rotor 13 in Bezug auf die Windrichtung auszurichten (z.B. Drehung um eine vertikale oder nahezu vertikale Achse) und/oder den Pitch der Rotorblätter 12 einzustellen.

Das Verfahren zum Betreiben einer Windkraftanlage 11, die einen Rotor 13 mit Rotorblättern 12 und zumindest eine Messanordnung 10 zur Erfassung von Verformungen, insbesondere Verbiegungen der äußeren Oberfläche, eines Konstruktionselementes 12, 14, 15, 16 der Windkraftanlage 11, insbesondere eines Rotorblattes 12 aufweist, enthält folgende Schritte: mittels der zumindest einen Messanordnung 10 werden an zumindest einem Konstruktionselement 12, 14, 15, 16 (z.B. an allen Rotorblättern 12 des Rotors 13) an zumindest zwei an dem Konstruktionselement 12, 14, 15, 16 angeordneten Messstellen 1, die in Richtung einer Erstreckung, vorzugsweise der Längserstreckung des Konstruktionselementes 12, 14, 15, 16 voneinander beabstandet sind, Beschleunigungsdaten erfasst. Zusätzlich werden an zumindest zwei, an dem Konstruktionselement 12, 14, 15, 16 angeordneten und in Richtung einer Erstreckung, vorzugsweise der Längserstreckung des Konstruktionselementes 12, 14, 15, 16 voneinander beabstandeten Stellen, Geschwindigkeitsdaten und/oder Lagedaten erfasst.

Die Beschleunigungsdaten werden mit den Geschwindigkeitsdaten und/oder Lagedaten zur Ermittlung der Verformungen des Konstruktionselementes 12, 14, 15, 16 miteinander verknüpft. Dies erfolgt vorzugsweise durch einen Algorithmus.

Die Verknüpfung und Ermittlung der Verformungen erfolgt vorzugweise durch die Auswerteeinrichtung 6.

Wie bereits oben erläutert ist es bevorzugt, wenn die Geschwindigkeitsdaten und/oder Lagedaten jeweils an denselben Messstellen 1 erfasst werden, an denen auch die Beschleunigungsdaten erfasst werden.

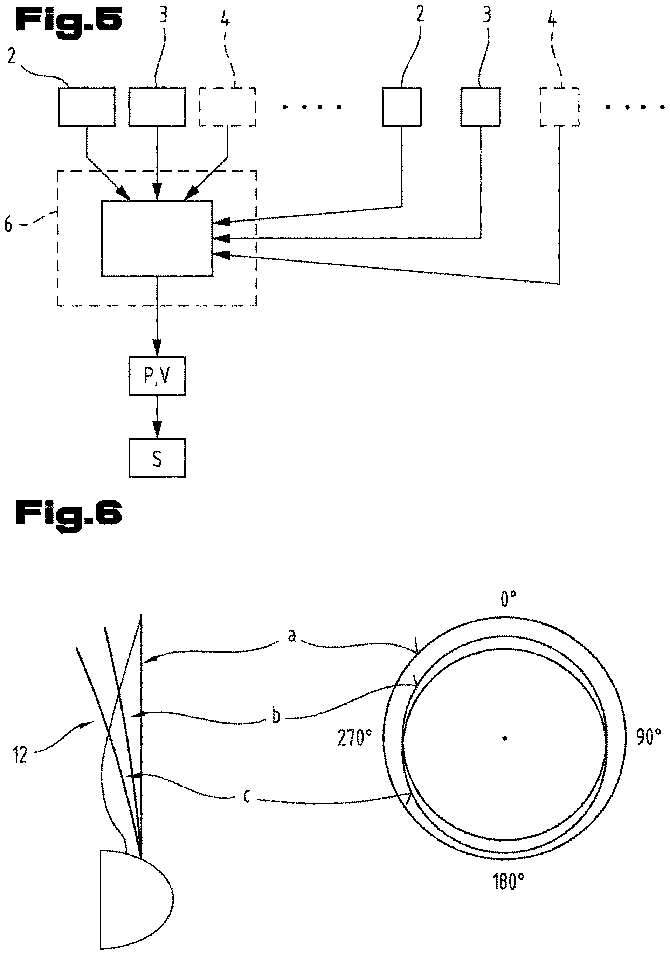

Im Folgenden wird das Prinzip näher erläutert. Fig. 6 zeigt ein Rotorblatt in verschiedenen verformungszuständen a, b und c sowie rechts davon den effektiven Radius entlang einer vollständigen Umdrehung, d.h. in Abhängigkeit der Rotordrehwinkels. Der effektive Radius wird durch eine Projektion des verbogenen Rotorblattes - in Richtung der Rotationsachse des Rotors - in das nicht verbogene Rotorblatt erhalten. Der Zustand a bedeutet "keine Verformung" (Ruhezustand), der Zustand b bedeutet "konstante Verformung" und der Zustand c bedeutet asymmetrische Verformung z.B. bei Windscherung. Solche Verformungsmuster können wie folgt erkannt werden.

Fig. 7 zeigt schematisch die Vorgehensweise. Zunächst werden aus den Beschleunigungsdaten $a_1(t)$, $a_2(t)$, ... sowie der Geschwindigkeitsdaten $v_1(t)$, $v_2(t)$, ... der einzelnen Messstellen mit der Bezeichnung 1, 2, ... durch Anwendung eines Algorithmus A die (absoluten oder relativen) Positionen $x_1(t)$, $x_2(t)$, ... der einzelnen Messstellen ermittelt. Zusätzlich zu den Beschleunigungs- und Geschwindigkeitsdaten (oder anstelle der Geschwindigkeitsdaten) könnten in diesem Schritt auch Lagedaten (z.B. mit Informationen über die Orientierung) einfließen.

Anschließend kann aus diesen Positionen $x_1(t)$, $x_2(t)$, ... der einzelnen Messstellen die Verformung V (Biegung, Torsion, Schwingungen, etc.) ermittelt werden.

Mit anderen Worten: aus den an einer Messstelle 1 erfassten Beschleunigungsdaten und den an derselben Messstelle 1 erfassten Geschwindigkeitsdaten und/oder Lagedaten wird die Position der Messstelle 1 ermittelt, wobei die ermittelte Position der Messstelle 1 eine Relativposition zu einem Bezugspunkt, insbesondere der Rotorblattwurzel und/oder der Rotorachse, und/oder eine absolute Position sein kann.

Eine Möglichkeit besteht z.B. darin von folgendem Modell auszugehen, welches zunächst die statische Beschleunigung As berücksichtigt, die im Wesentlichen von der gravitationsbedingten Beschleunigung $a_g$ und der Zentrifugalbeschleunigung $a_c$ abhängt:

$$A_s = R_x \cdot R_z \cdot \left( R_y \cdot \begin{pmatrix} a_g \\ 0 \\ 0 \end{pmatrix} + \begin{pmatrix} -a_c \\ 0 \\ 0 \end{pmatrix} \right)$$

$R_x$ ist die Rotationsmatrix einer Messstelle um die x-Achse aufgrund des Pitchs. $R_z$ ist die Rotationsmatrix der Messstelle um die z-Achse aufgrund der Orientierung des Rotors bzw. der Messstelle. $R_y$ ist die Rotationsmatrix der Messstelle um die y-Achse, welche der Rotation des Rotors 13 um seine Rotationsachse entspricht.

Weiters können dynamische Beschleunigungen $A_d$ wie die Coriolisbeschleunigung und die Eulerbeschleunigung, welche u.a. von der Drehgeschwindigkeit und der Position der jeweiligen Messstelle, in das Modell Eingang finden: $A = A_s + A_d$.

Aus dem oben angegebenen Modell ist ersichtlich, dass insbesondere die Geschwindigkeiten, gegebenenfalls aber auch die Lagen bzw. Orientierungen der Messstelle, insbesondere in Form der Rotationsmatrizen, eine wesentliche Bedeutung bei der Modellierung der Beschleunigung bzw. der zu erfassenden Verformung aufweisen. Durch das erfindungsgemäße Konzept, die Geschwindigkeiten und/oder Lagen direkt vor Ort - also direkt am sich bewegenden, schwingenden oder sonstigen Verformungen ausgesetzten Konstruktionselement selbst, vorzugsweise jeweils an einer Messstelle konzentriert zu messen, kann die Genauigkeit der Verformungserfassung wesentlich erhöht werden. Ein Grund dafür ist, dass die Behandlung einer Messstelle - z.B. mittels eines Modells oder Algorithmus - individuell und basierend auf den direkt an der Messstelle aufgenommenen Daten (Beschleunigungsdaten sowie Geschwindigkeits- und/oder Lagedaten) erfolgen kann.

Die Beschleunigungsdaten sowie die Geschwindigkeitsdaten und/oder Lagedaten können kontinuierlich erfasst werden, wobei vorzugsweise die Verformungen des Konstruktionselementes 12, 14, 15, 16 ebenfalls kontinuierlich ermittelt werden.

Aus den ermittelten Positionen mehrerer Messstellen 1 kann die Verformung des Konstruktionselementes, insbesondere ein Biegeverlauf entlang einer Erstreckung, vorzugsweise der Längserstreckung des Konstruktionselementes, ermittelt wird, werden. Dies geschieht vorzugsweise in 3 Dimensionen. Die in Fig. 17 schematisch dargestellten Größen sind in diesem Fall Vektoren bzw. Matrizen.

Aus den ermittelten Beschleunigungsdaten sowie den Geschwindigkeitsdaten und/oder Lagedaten können auch die Positionen der Messstellen 1 in Abhängigkeit der Zeit ermittelt werden. Auch können die Verformungen des Konstruktionselementes 12, 14, 15, 16 in Abhängigkeit der Zeit und/oder in Abhängigkeit des Rotationswinkels des Rotors 13 ermittelt werden.

In Fig. 5 ist zudem angedeutet, dass in Abhängigkeit der Beschleunigungsdaten sowie der Geschwindigkeitsdaten und/oder Lagedaten die Windkraftanlage 11 gesteuert werden kann, insbesondere der Rotor 13 in Bezug auf die Windrichtung ausgerichtet und/oder der Pitch der Rotorblätter 12 eingestellt werden kann. Dabei können in Abhängigkeit der ermittelten Positionen (der Messstellen) und Verformungen V des Konstruktionselementes Steuerbefehle S generiert werden, die von der Auswerteeinrichtung 6 und/oder Steuereinrichtung 8 an entsprechende Aktoren der Windkraftanlage 11 weitergeleitet werden.

In Fig. 6 ist zu sehen, dass im Zustand c eine asymmetrische (d.h. eine vom Drehwinkel abhängige) Verformung auftritt. In solchen Fällen kann nun die Steuerung der Windkraftanlage 11 derart erfolgen, dass die Einstellung des Pitchs eines oder mehrerer Rotorblätter 12 in Abhängigkeit des Rotationswinkels des Rotors 13 erfolgt, um einer solchen asymmetrischen Verformung bestmöglich zu begegnen. In Abhängigkeit des Rotationswinkels bedeutet, dass innerhalb einer Umdrehung des Rotors (zumindest zwei, vorzugsweise beliebig viele) verschiedene Einstellungen vorgenommen werden können.

Die Vorzüge einer Einstellung in Echtzeit wurden bereits weiter oben ausführlich erläutert.

Weiters kann ein Vergleich der ermittelten Beschleunigungen, Geschwindigkeiten und/oder Lagen der einzelnen Messstellen 1 und/oder der ermittelten Verformungen des Konstruktionselementes 12, 14, 15, 16, insbesondere des Rotorblattes 12, mit einem Modell durchgeführt werden, wobei vorzugsweise Abweichungen von dem Modell zur Erkennung von Verformungsmustern herangezogen werden.

Auch können die ermittelten Verformungen mit einer Anzahl hinterlegter Verformungsmuster, welche insbesondere Biegeformen und/oder zeitliche Abhängigkeiten umfassen können, verglichen werden. Dabei kann jenes Verformungsmuster ausgewählt werden, welches die geringsten Abweichungen von den ermittelten Verformungen aufweist.

Den hinterlegten Verformungsmustern kann jeweils zumindest eine vorgegebene Einstellung der Windkraftanlage 11 zugeordnet sein. Die dem ausgewählten Verformungsmuster zugeordnete Einstellung, insbesondere eine bestimmte Ausrichtung des Rotors 13 in Bezug auf die Windrichtung und/oder eine Einstellung des Pitchs der Rotorblätter 12, wird dann vorgenommen und/oder beibehalten.

Schließlich kann in der Steuereinrichtung 8 ein selbstlernender Algorithmus hinterlegt sein, welcher dazu ausgebildet ist, anhand eines oder mehrerer Verformungsmuster, vorzugsweise anhand in zeitlichen Abständen ermittelten Verformungsmuster, Einstellungen, insbesondere Einstellungsparameter, der Windkraftanlage 11 anzupassen und/oder beizubehalten, wobei vorzugsweise der selbstlernende Algorithmus auf hinterlegte Referenzdaten mit Verformungsmustern und/oder Einstellungen zurückgreift.

Die nachfolgenden Varianten betreffen die bevorzugte Möglichkeit, die zu verschiedenen, voneinander beabstandeten Messstellen gehörigen Sensoren zeitliche in Gleichtakt zu bringen. So können die Sensoren 2, 3, 4 der verschiedenen Messstellen 1 durch die Auswerteeinrichtung 6 - vorzugsweise mittels eines von der Auswerteeinrichtung 6 an die Sensoren 2, 3, 4 gesendeten Signals, insbesondere in Form eines Datenpakets - zeitlich synchronisiert werden, insbesondere hinsichtlich des Zeitpunktes der von den jeweiligen Sensoren 2, 3, 4 durchgeführten Messung und/oder des Zeitpunktes der Übertragung der Sensordaten von den Sensoren 2, 3, 4 an die Auswerteeinrichtung 6.

Bevorzugt ist hier, wenn die Auswerteeinrichtung 6 ausgebildet ist, an die Sensoren 2, 3, 4 der Messstellen 1 ein Signal zu übermitteln, durch welches die Sensoren 2, 3, 4 der verschiedenen Messstellen 1 zeitlich synchronisiert werden, sodass die derart synchronisierten Sensoren 2, 3, 4 innerhalb eines gemeinsamen Zeitfensters, welches vor-zugsweise höchstens $500\mu s$, bevorzugt höchstens $100\mu s$, besonders bevorzugt höchstens $50\mu s$, beträgt, jeweils zu-mindest eine Messung durchführen.

Mit anderen Worten: Die Sensoren werden über von der Basis ausgesandte Datenpakete so zueinander in Gleichtakt gebracht, dass sie binnen einer Toleranz von bevorzugt $< 100\mu s$, in einer vorteilhaften Ausführung $<50\mu s$ oder darunter gleichzeitig messen. Damit ist nahezu dieselbe gleichzeitige Abtastung an mehreren Positionen möglich - und zwar auch dann, wenn die Übertragung zwischen Basis/Auswerteeinrichtung drahtlos ist und die Sensoren unabhängig voneinander sind (d.h. bei Sensoren, die untereinander nicht oder zumindest nicht notwendigerweise kommunizieren).

Zusätzlich und alternativ zu den Verformungen können aus den Sensordaten der Sensoren 2, 3, 4, insbesondere durch Verknüpfung der Beschleunigungsdaten der Beschleunigungssensoren 2 mit den Geschwindigkeitsdaten der Geschwindigkeitssensoren 3 und/oder Lagedaten der Lagesensoren 4, zumindest eine, vorzugsweise mehrere, der folgenden Größen und/oder Eigenschaften ermittelt werden:

- den absoluten Pitchwinkel zumindest eines Rotorblattes und/oder
- den relativen Pitchwinkel zumindest zweier Rotorblätter zueinander und/oder
- die Torsion zumindest eines Rotorblattes und/oder zumindest zweier Rotorblätter zu-einander und/oder
- die auf zumindest ein Rotorblatt einwirkende Last und/oder einwirkenden Lastzyklus und/oder
- eine Quelle für erhöhte Lärmemission und/oder
- ein Frühzeichen eines Schadens oder fehlerhaften Regelungszustands der Windkraft-anlage und/oder
- die Art, Stärke, Dynamik und/oder Richtung von Winden und/oder
- eine Änderung des Schwingungsverhaltens des Konstruktionselementes und/oder
- einen Rotorblattschaden,

wobei vorzugsweise die Ermittlung der Größe(n) und/oder Eigenschaften(en) einen Vergleich zwischen aktuellen (Sensor-)Daten und historischen (Sensor-)Daten und/oder einen Vergleich zwischen den (Sensor-)Daten eines Rotorblattes und den (Sensor-)Daten zumindest eines anderen Rotorblattes umfasst.

Die Messung der Torsion der Blätter kann statisch, dynamisch und/oder die einzelnen Rotorblätter zueinander erfolgen. So können auch Blattlasten und Lastzyklen bestimmt werden. Auch die Messung von Vibrationsmustern kann lokal, global und/oder bezogen auf die einzelnen Rotorblätter zueinander erfolgen. Daraus kann z.B. eine Quelle für erhöhte Lärmemission oder ein Frühzeichen eines Schadens oder fehlerhaften Regelungszustands identifiziert werden. Weiters ist Detektion/Charakterisierung von Scherwinden, Turbulenzen, Böen, Schräganströmungen und/oder falschen Azimutwinkeln der Windkraftanlage möglich. Blattschäden können z.B. aus einem verändertem Schwingungsverhalten des Rotorblattes erkannt werden (z.B. durch einen Vergleich einer Sensorposition mit historischen Daten an derselben Position oder Vergleich einer radialen Position mit aktuellen Daten, die von anderen Rotorblättern gewonnen wurden).

Auch hier ist die Auswerteeinrichtung 6 vorzugsweise ausgebildet, die Verformungen und/oder die Größen und/oder Eigenschaften aus jenen Sensordaten zu ermitteln, die durch die synchroni-sierten Sensoren 2, 3, 4 innerhalb eines gemeinsamen Zeitfensters, welches vorzugsweise höchstens $500\mu s$, bevorzugt höchstens $100\mu s$, besonders bevorzugt höchstens $50\mu s$, beträgt, aufgenommen wurden.

**Bezugszeichenaufstellung**

1          Messstelle
2          Beschleunigungssensor

| 3 | Geschwindigkeitssensor |
|---|---|
| 4 | Lagesensor |
| 5 | Drahtlos-Schnittstelle |
| 6 | Auswerteeinrichtung |
| 7 | Photovoltaikeinrichtung |
| 8 | Steuereinrichtung |
| 9 | - |
| 10 | Messanordnung |
| 11 | Windkraftanlage |
| 12 | Rotorblatt |
| 13 | Rotor |
| 14 | Gondel |
| 15 | Turm |
| 16 | Fundament |
| 17 | Messeinheit |
| a | ohne Biegung |
| b | konstante Biegung |
| c | Biegung bei Windscherung |
| P | Position |
| S | Steuerbefehl |
| A | Algorithmus |
| $a_1(t)$, $a_2(t)$ | Beschleunigungsdaten |
| $v_1(t)$, $v_2(t)$ | Geschwindigkeitsdaten |
| $x_1(t)$, $x_2(t)$ | Positionsdaten |
| V | Verformung |

**Patentansprüche**

1. Messanordnung (10) zur Erfassung von Verformungen, insbesondere Verbiegungen der äußeren Oberfläche, eines Konstruktionselementes (12, 14, 15, 16) einer Windkraftanlage (11), wobei das Konstruktionselement ein Rotorblatt (12) der Windkraftanlage (11) ist, umfassend:

    zumindest drei, vorzugsweise zumindest fünf, an dem Konstruktionselement (12, 14, 15, 16) angeordnete Messstellen (1), die in Richtung der Längserstreckung des Konstruktionselementes (12) voneinander beabstandet sind und jeweils zumindest einen Beschleunigungssensor (2) aufweisen,
    wobei die Beschleunigungssensoren (2) - vorzugsweise über eine Drahtlos-Schnittstelle (5) - mit einer Auswerteeinrichtung (6) kommunikationsverbindbar sind,
    **dadurch gekennzeichnet, dass** die Messanordnung (10) zumindest zwei, an dem Konstruktionselement (12) angeordnete und in Richtung der Längserstreckung des Konstruktionselementes (12) voneinander beabstandete Geschwindigkeitssensoren (3), insbesondere Winkelgeschwindigkeitssensoren, aufweist
    und/oder dass die Messanordnung (10) zumindest zwei, an dem Konstruktionselement (12) angeordnete und in Richtung der Längserstreckung des Konstruktionselementes (12) voneinander beabstandete Lagesensoren (4), insbesondere Magnetfeldsensoren, aufweist,
    wobei die Messstellen (1) jeweils - zusätzlich zu dem Beschleunigungssensor (2) - zumindest einen Geschwindigkeitssensor (3) und/oder zumindest einen Lagesensor (4) aufweisen und
    wobei die Geschwindigkeitssensoren (3) und/oder die Lagesensoren (4) mit der Auswerteeinrichtung (6) - vorzugsweise über eine Drahtlos-Schnittstelle (5) - kommunikationsverbindbar sind,
    und dass zumindest eine, vorzugsweise zumindest zwei, der Messstellen (1) im Bereich der Rotorblattspitze und/oder in einem Abstand von der Rotorblattspitze, der höchstens so groß ist wie 20% der Gesamtlänge des Rotorblattes (12), angeordnet ist/sind,
    und dass

    zumindest eine Messstelle (1) abseits der Verbindungsgeraden zwischen den äußersten Messstellen (1) der Messanordnung (10), vorzugsweise zwischen der Messstelle (1), die der Rotorblattwurzel am nächsten liegt, und der Messstelle (1), die der Rotorblattspitze am nächsten liegt, angeordnet ist, wobei vorzugsweise der Normalabstand von der Verbindungsgeraden zumindest 20cm, vorzugsweise zumindest 50cm, beträgt, und/oder zumindest 0,5%, bevorzugt zumindest 1% der Längserstreckung des Konstruktionselementes

15

(12) beträgt,
und/oder dass zumindest eine Messstelle (1) an einer ersten Seite, insbesondere der Vorderseite, des Konstruktionselementes (12) und zumindest eine Messstelle (1) an einer zweiten, der ersten Seite gegenüberliegenden Seite, insbesondere der Rückseite, des Konstruktionselementes (12) angeordnet ist.

**2.** Messanordnung nach Anspruch 1, **dadurch gekennzeichnet, dass** der Abstand zwischen einem Beschleunigungssensor (2) und einem zur selben Messstelle (1) gehörigen Geschwindigkeitssensor (3) und/oder Lagesensor (4) höchstens 5cm, bevorzugt höchstens 1cm, besonders bevorzugt höchstens 5mm, beträgt
und/oder dass der Beschleunigungssensor (2) einer Messstelle (1) zusammen mit einem zur selben Messstelle (1) gehörigen Geschwindigkeitssensor (3) und/oder einem zur selben Messstelle (1) gehörigen Lagesensor (4) in einer Messeinheit (17) integriert ist und/oder in einer gemeinsamen Umhausung untergebracht ist.

**3.** Messanordnung nach einem der vorhergehenden Ansprüche, **dadurch gekennzeichnet, dass** die Beschleunigungssensoren (2) jeweils zur Erfassung der Beschleunigung in 3 Raumrichtungen ausgebildet sind und/oder dass die Geschwindigkeitssensoren (3) jeweils zur Erfassung der Geschwindigkeit in 3 Raumrichtungen ausgebildet sind und/oder dass die Lagesensoren (4) zur Erfassung der Lage oder Orientierung in 3 Raumrichtungen ausgebildet sind.

**4.** Messanordnung nach einem der vorhergehenden Ansprüche, **dadurch gekennzeichnet, dass** die Messeinheit (17) eine flächige Basis, welche die Sensoren (2, 3, 4) trägt, aufweist, wobei vorzugsweise die flächige Basis durch ein folienartiges und/oder biegsames Material gebildet ist und vorzugsweise zumindest ein zusätzliches funktionelles Element trägt, insbesondere eine mit den Sensoren (2, 3, 4) verbundene Drahtlos-Schnittstelle (5) zur Übertragung der Sensordaten an eine Auswerteeinheit (6) und/oder eine Energieumwandlungseinrichtung (7) zur Versorgung der Sensoren (2, 3, 4) mit Energie, wobei vorzugsweise die flächige Basis an die Oberfläche des Rotorblattes (12) der Windkraftanlage (11) geklebt ist.

**5.** Messanordnung nach einem der vorhergehenden Ansprüche, **dadurch gekennzeichnet, dass** die Beschleunigungssensoren (2) und/oder die Geschwindigkeitssensoren (3) und/oder die Lagesensoren (4) an einer Außenfläche des Rotorblattes (12) angeordnet, vorzugsweise angeklebt, sind und/oder dass die Beschleunigungssensoren (2) und/oder die Geschwindigkeitssensoren (3) und/oder die Lagesensoren (4) als mikro-elektro-mechanische Systeme (MEMS) ausgebildet sind.

**6.** Messanordnung nach einem der vorhergehenden Ansprüche, **dadurch gekennzeichnet, dass** die Auswerteeinrichtung (6) ausgebildet ist, die Beschleunigungsdaten der Beschleunigungssensoren (2) mit den Geschwindigkeitsdaten der Geschwindigkeitssensoren (3) und/oder Lagedaten der Lagesensoren (4) zu verknüpfen und daraus Verformungen des Konstruktionselementes (12) zu ermitteln.

**7.** Messanordnung nach einem der vorhergehenden Ansprüche, **dadurch gekennzeichnet, dass** die Sensoren (2, 3, 4) der verschiedenen Messstellen (1) der Messanordnung (10) durch die Auswerteeinrichtung (6) - vorzugsweise mittels eines von der Auswerteeinrichtung (6) an die Sensoren (2, 3, 4) gesendeten Signals, insbesondere in Form eines Datenpakets - zeitlich synchronisierbar sind, insbesondere hinsichtlich des Zeitpunktes der von den jeweiligen Sensoren (2, 3, 4) durchgeführten Messung und/oder des Zeitpunktes der Übertragung der Sensordaten von den Sensoren (2, 3, 4) an die Auswerteeinrichtung (6).

**8.** Messanordnung nach einem der vorhergehenden Ansprüche, **dadurch gekennzeichnet, dass** die Auswerteeinrichtung (6) ausgebildet ist, an die Sensoren (2, 3, 4) der Messstellen (1) ein Signal zu übermitteln, durch welches die Sensoren (2, 3, 4) der verschiedenen Messstellen (1) zeitlich synchronisiert werden, sodass die derart synchronisierten Sensoren (2, 3, 4) innerhalb eines gemeinsamen Zeitfensters, welches vorzugsweise höchstens $500\mu s$, bevorzugt höchstens $100\mu s$, besonders bevorzugt höchstens $50\mu s$, beträgt, jeweils zumindest eine Messung durchführen,
und/oder dass die Auswerteeinrichtung (6) ausgebildet ist, die Verformungen und/oder die Größen und/oder Eigenschaften aus jenen Sensordaten zu ermitteln, die durch die synchronisierten Sensoren (2, 3, 4) innerhalb eines gemeinsamen Zeitfensters, welches vorzugsweise höchstens $500\mu s$, bevorzugt höchstens $100\mu s$, besonders bevorzugt höchstens $50\mu s$, beträgt, aufgenommen wurden.

**9.** Messanordnung nach einem der vorhergehenden Ansprüche, **dadurch gekennzeichnet, dass** die Auswerteeinrichtung ausgebildet ist, aus den Sensordaten der Sensoren (2, 3, 4), insbesondere durch Verknüpfung der Beschleunigungsdaten der Beschleunigungssensoren (2) mit den Geschwindigkeitsdaten der Geschwindigkeitssensoren (3) und/oder Lagedaten der Lagesensoren (4), zumindest eine, vorzugsweise mehrere, der folgenden Größen und/oder Eigenschaften zu ermitteln:

- den absoluten Pitchwinkel zumindest eines Rotorblattes und/oder
- den relativen Pitchwinkel zumindest zweier Rotorblätter zueinander und/oder
- die Torsion zumindest eines Rotorblattes und/oder zumindest zweier Rotorblätter zueinander und/oder
- die auf zumindest ein Rotorblatt einwirkende Last und/oder einwirkenden Lastzyklus und/oder
- eine Quelle für erhöhte Lärmemission und/oder
- ein Frühzeichen eines Schadens oder fehlerhaften Regelungszustands der Windkraftanlage und/oder
- die Art, Stärke, Dynamik und/oder Richtung von Winden und/oder
- eine Änderung des Schwingungsverhaltens des Konstruktionselementes und/oder
- einen Rotorblattschaden,

wobei vorzugsweise die Ermittlung der Größe(n) und/oder Eigenschaften(en) einen Vergleich zwischen aktuellen Daten und historischen Daten und/oder einen Vergleich zwischen den Daten eines Rotorblattes und den Daten zumindest eines anderen Rotorblattes umfasst.

10. Windkraftanlage (11) umfassend

einen Rotor (13) mit zumindest zwei, vorzugsweise drei, Rotorblättern (12) und
zumindest eine Messanordnung (10) zur Erfassung von Verformungen zumindest eines Konstruktionselementes der Windkraftanlage (11), wobei das Konstruktionselement ein Rotorblatt (12) der Windkraftanlage (11) ist, und eine Steuereinrichtung (8),
**dadurch gekennzeichnet, dass** die zumindest eine Messanordnung (10) nach einem der vorhergehenden Ansprüche ausgebildet ist.

11. Windkraftanlage nach Anspruch 10, **dadurch gekennzeichnet, dass** für zumindest zwei Rotorblätter (12) der Windkraftanlage (11), insbesondere für jedes Rotorblatt (12) des Rotors (13), eine Messanordnung (10) nach einem der Ansprüche 1 bis 9 vorgesehen ist, wobei vorzugsweise die Sensoren (2, 3, 4) der Messanordnungen (10) mit einer zentralen Auswerteeinrichtung (6) - vorzugsweise über eine Drahtlos-Schnittstelle (5) - kommunikationsverbunden sind,
und/oder dass die Steuereinrichtung (8) eingerichtet ist, um in Abhängigkeit der von den Messstellen (1) der Messanordnung (10) generierten Sensorsignale die Windkraftanlage (10) zu steuern, insbesondere den Rotor (13) in Bezug auf die Windrichtung auszurichten und/oder den Pitch der Rotorblätter (12) einzustellen.

12. Verfahren zum Betreiben einer Windkraftanlage (11), die einen Rotor (13) mit Rotorblättern (12) und zumindest eine Messanordnung (10) zur Erfassung von Verformungen, insbesondere Verbiegungen der äußeren Oberfläche, eines Konstruktionselementes der Windkraftanlage (11), welches Konstruktionselement ein Rotorblatt (12) ist, aufweist, wobei mittels der zumindest einen Messanordnung (10) an zumindest einem Rotorblatt (12), vorzugsweise jeweils an allen Rotorblättern (12) des Rotors (13), an zumindest zwei an dem Rotorblatt (12) angeordneten Messstellen (1), die in Richtung einer Erstreckung, vorzugsweise der Längserstreckung, des Rotorblattes (12) voneinander beabstandet sind, Beschleunigungsdaten erfasst werden, **dadurch gekennzeichnet, dass** an zumindest zwei, an dem Rotorblatt (12) angeordneten und in Richtung der Längserstreckung des Rotorblattes (12) voneinander beabstandeten Stellen, Geschwindigkeitsdaten und/oder Lagedaten erfasst werden, wobei vorzugsweise die Geschwindigkeitsdaten und/oder Lagedaten jeweils an denselben Messstellen (1) erfasst werden, an denen die Beschleunigungsdaten erfasst werden,
und dass die Beschleunigungsdaten mit den Geschwindigkeitsdaten und/oder Lagedaten zur Ermittlung der Verformungen des Rotorblattes (12) - vorzugsweise durch eine Auswerteeinrichtung (6), die mit den Sensoren (2, 3, 4) kommunikationsverbunden ist - verknüpft werden, und dass die Messanordnung (10) nach einem der Ansprüche 1 bis 9 und/oder die Windkraftanlage (11) nach einem der Ansprüche 10 bis 11 ausgebildet ist.

13. Verfahren nach Anspruch 12, **dadurch gekennzeichnet, dass** aus den an einer Messstelle (1) erfassten Beschleunigungsdaten und den an derselben Messstelle (1) erfassten Geschwindigkeitsdaten und/oder Lagedaten die Position der Messstelle (1) ermittelt wird, wobei die ermittelte Position der Messstelle (1) eine Relativposition zu einem Bezugspunkt, insbesondere der Rotorblattwurzel und/oder der Rotorachse, und/oder eine absolute Position ist, wobei vorzugsweise aus den ermittelten Positionen mehrerer Messstellen (1) die Verformung des Konstruktionselementes (12), insbesondere ein Biegeverlauf entlang einer Erstreckung, vorzugsweise der Längserstreckung, des Konstruktionselementes (12), ermittelt wird, wobei vorzugsweise die Verformung des Konstruktionselementes (12) in 3 Dimensionen ermittelt wird.

14. Verfahren nach Anspruch 12 oder 13, **dadurch gekennzeichnet, dass** aus den ermittelten Beschleunigungsdaten sowie den Geschwindigkeitsdaten und/oder Lagedaten die Positionen der Messstellen (1) in Abhängigkeit der Zeit ermittelt werden und/oder dass die Verformungen des Konstruktionselementes (12) in Abhängigkeit der Zeit und/oder in Abhängigkeit des Rotationswinkels des Rotors (13) ermittelt werden und/oder dass die Steuerung der Windkraftanlage (11) derart erfolgt, dass die Einstellung des Pitchs eines oder mehrerer Rotorblätter (12) in Abhängigkeit des Rotationswinkels des Rotors (13) erfolgt.

15. Verfahren nach einem der Ansprüche 12 bis 14, **dadurch gekennzeichnet, dass** ein Vergleich der ermittelten Beschleunigungen, Geschwindigkeiten und/oder Lagen der einzelnen Messstellen (1) und/oder der ermittelten Verformungen des Rotorblattes (12), mit einem Modell durchgeführt wird, wobei vorzugsweise Abweichungen von dem Modell zur Erkennung von Verformungsmustern herangezogen werden
und/oder dass die ermittelten Verformungen mit einer Anzahl hinterlegter Verformungsmuster, welche insbesondere Biegeformen und/oder zeitliche Abhängigkeiten umfassen können, verglichen werden, wobei vorzugsweise jenes Verformungsmuster ausgewählt wird, welches die geringsten Abweichungen von den ermittelten Verformungen aufweist.

## Claims

1. A measuring arrangement (10) for detecting deformations, in particular bending of the outer surface, of a structural element (12, 14, 15, 16) of a wind turbine (11), wherein the structural element is a rotor blade (12) of the wind turbine (11), comprising:

   at least three, preferably at least five, measurement sites (1) arranged on the structural element (12, 14, 15, 16) and being spaced apart from one another in the direction of the longitudinal extension of the structural element (12) and each having at least one acceleration sensor (2),
   wherein the acceleration sensors (2) can be communication-connected - preferably via a wireless interface (5) - to an evaluation device (6),
   **characterized in that** the measuring arrangement (10) has at least two speed sensors (3), in particular angular speed sensors, arranged on the structural element (12) and spaced apart from one another in the direction of the longitudinal extension of the structural element (12),
   and/or that the measuring arrangement (10) has at least two position sensors (4), in particular magnetic field sensors, arranged on the structural element (12) and spaced apart from one another in the direction of the longitudinal extension of the structural element (12),
   wherein the measurement sites (1) each have at least one speed sensor (3) and/or at least one position sensor (4) - in addition to the acceleration sensor (2) -, and
   wherein the speed sensors (3) and/or the position sensors (4) can be communication-connected to the evaluation device (6) - preferably via a wireless interface (5),
   and that at least one, preferably at least two, of the measurement sites (1) is/are arranged in the region of the rotor blade tip and/or at a distance from the rotor blade tip, which distance is at most as great as 20 % of the total length of the rotor blade (12),
   and that
   at least one measurement site (1) is arranged away from the connecting line between the outermost measurement sites (1) of the measuring arrangement (10), preferably between the measurement site (1) closest to the rotor blade root and the measurement site (1) closest to the rotor blade tip, wherein preferably the normal distance from the connecting line amounts to at least 20 cm, preferably at least 50 cm, and/or at least 0.5 %, preferably at least 1 %, of the longitudinal extension of the structural element (12),
   and/or that at least one measurement site (1) is arranged on a first side, in particular the front side, of the structural element (12), and at least one measurement site (1) is arranged on a second side opposite the first side, in particular on the rear side, of the structural element (12).

2. The measuring arrangement according to claim 1, **characterized in that** the distance between an acceleration sensor (2) and a speed sensor (3) and/or position sensor (4) belonging to the same measurement site (1) amounts to a maximum of 5 cm, preferably a maximum of 1 cm, particularly preferably a maximum of 5 mm,
   and/or that the acceleration sensor (2) of a measurement site (1), together with a speed sensor (3) belonging to the same measurement site (1) and/or a position sensor (4) belonging to the same measurement site (1), is integrated in a measuring unit (17) and/or is accommodated in a common housing.

3. The measuring arrangement according to one of the preceding claims, **characterized in that** the acceleration sensors (2) are each configured to detect the acceleration in 3 spatial directions, and/or that the speed sensors (3) are each configured to detect the speed in 3 spatial directions, and/or that the position sensors (4) are configured to detect the position or orientation in 3 spatial directions.

4. The measuring arrangement according to one of the preceding claims, **characterized in that** the measuring unit (17) has a flat base which carries the sensors (2, 3, 4), wherein preferably the flat base is formed by a film-like and/or pliant material and preferably carries at least one additional functional element, in particular a wireless interface (5) connected to the sensors (2, 3, 4) for transmitting the sensor data to an evaluation unit (6) and/or an energy conversion device (7) for supplying the sensors (2, 3, 4) with energy, wherein preferably the flat base is adhered to the surface of the rotor blade (12) of the wind turbine (11).

5. The measuring arrangement according to one of the preceding claims, **characterized in that** acceleration sensors (2) and/or the speed sensors (3) and/or the position sensors (4) are arranged, preferably glued, on an outer surface of the rotor blade (12), and/or that the acceleration sensors (2) and/or the speed sensors (3) and/or the position sensors (4) are configured as micro-electro-mechanical systems (MEMS).

6. The measuring arrangement according to one of the preceding claims, **characterized in that** the evaluation device (6) is configured to link the acceleration data of the acceleration sensors (2) to the speed data of the speed sensors (3) and/or position data of the position sensors (4) and to determine deformations of the structural element (12) based thereon.

7. The measuring arrangement according to one of the preceding claims, **characterized in that** the sensors (2, 3, 4) of the different measurement sites (1) of the measuring arrangement (10) may be synchronized in time by means of the evaluation device (6) - preferably by means of a signal transmitted from the evaluation device (6) to the sensors (2, 3, 4), in particular in the form of a data package -, in particular with respect to the point in time of the measurement carried out by the respective sensors (2, 3, 4) and/or the point in time of the transmission of the sensor data from the sensors (2, 3, 4) to the evaluation device (6).

8. The measuring arrangement according to one of the preceding claims, **characterized in that** the evaluation device (6) is configured to transmit a signal to the sensors (2, 3, 4) of the measurement sites (1), by means of which signal the sensors (2, 3, 4) of the different measurement sites (1) are synchronized in time, so that the thusly synchronized sensors (2, 3, 4) each carry out at least one measurement within a common time frame, which is preferably at most 500 $\mu$s, preferably at most 100 $\mu$s, particularly preferably at most 50 $\mu$s,
and/or that the evaluation device (6) is configured to determine the deformations and/or the quantities and/or properties from that sensor data which was gathered by the synchronized sensors (2, 3, 4) within a common time frame, which preferably amounts to a maximum of 500 $\mu$s, preferably a maximum of 100 $\mu$s, particularly preferably a maximum of 50 $\mu$s.

9. The measuring arrangement according to one of the preceding claims, **characterized in that** the evaluation device is configured to determine at least one, preferably multiple, of the following values and/or properties from the sensor data of the sensors (2, 3, 4), in particular by linking the acceleration data of the acceleration sensors (2) to the speed data of the speed sensors (3) and/or position data of the position sensors (4):

- the absolute pitch angle of at least one rotor blade, and/or
- the relative pitch angle of at least two rotor blades to one another, and/or
- the torsion of at least one rotor blade and/or at least two rotor blades to one another, and/or
- the load and/or load cycle acting o at least one rotor blade, and/or
- a source for increase noise emissions, and/or
- an early sign of damage or faulty regulating state of the wind turbine, and/or
- the type, force, dynamics and/or direction of winds, and/or
- a change of the oscillation behavior of the structural element, and/or
- damage to the rotor blade,

wherein preferably the determination of the quantity(-ies) and properties comprises a comparison between current data and historical data and/or a comparison between the data of a rotor blade and the data of at least one other rotor blade.

10. A wind turbine (11) comprising

   a rotor (13) having at least two, preferably three, rotor blades (12), and
   at least one measuring arrangement (10) for detecting deformations of at least one structural element of the wind turbine (11), wherein the structural element is a rotor blade (12) of the wind turbine (11), and
   a control device (8),
   **characterized in that** the at least one measuring arrangement (10) is formed according to one of the preceding claims.

11. The wind turbine according to claim 10, **characterized in that** for at least two rotor blades (12) of the wind turbine (11), in particular for each rotor blade (12) of the rotor (13), a measuring arrangement (10) according to one of claims 1 to 9 is provided, wherein the sensors (2, 3, 4) of the measuring arrangements (10) are preferably communication-connected - preferably via a wireless interface (5) - to a central evaluation device (6), and/or that the control device (8) is configured to control the wind turbine (10) depending on the sensor signals generated by the measurement sites (1) of the measuring arrangement (10), in particular to adjust the rotor (13) with respect to the wind direction and/or to set the pitch of the rotor blades (12).

12. A method for operating a wind turbine (11), which has a rotor (13) having rotor blades (12) and at least one measuring arrangement (10) for detecting deformations, in particular bending of the outer surface, of a structural element of the wind turbine (11), which structural element is a rotor blade (12), wherein acceleration data is gathered by means of the at least one measuring arrangement (10) on at least one rotor blade (12), preferably in each case on all of the rotor blades (12) of the rotor (13), at at least two measurement sites (1) arranged on the rotor blade (12) and being spaced apart from one another in the direction of an extension, preferably the longitudinal extension, of the rotor blade (12), **characterized in that** speed data and/or position data is gathered at at least two sites arranged on the rotor blade (12) and spaced apart from one another in the direction of the longitudinal extension, of the rotor blade (12), wherein preferably the speed data and/or position data is, in each case, detected at the same measurement sites (1) at which the acceleration data is detected,

   and that the acceleration data is linked to the speed data and/or position data for determining the deformations of the rotor blade (12) - preferably by means of an evaluation device (6) communication-connected to the sensors (2, 3, 4),
   and that the measuring arrangement (10) is formed according to one of claims 1 to 9 and/or the wind turbine (11) is formed according to one of claims 10 to 11.

13. The method according to claim 12, **characterized in that** the position of the measurement site (1) is determined based on the acceleration data detected at a measurement site (1) and the speed data and/or position data detected at the same measurement site (1), wherein the determined position of the measurement site (1) is a relative position to a reference point, in particular the rotor blade root and/or the rotor axis, and/or an absolute position, wherein preferably the deformation of the structural element (12), in particular a bending profile along an extension, preferably the longitudinal extension, of the structural element (12), is determined based on the determined positions of multiple measurement sites (1), wherein preferably the deformation of the structural element (12) is determined in 3 dimensions.

14. The method according to claim 12 or 13, **characterized in that** the positions of the measurement sites (1) are determined as a function of the time on the basis of the determined acceleration data as well as the speed data and/or position data, and/or that the deformations of the structural element (12) are determined as a function of time and/or depending on the rotation angle of the rotor (13), and/or that the control of the wind turbine (11) is carried out such that the setting of the pitch of one or multiple rotor blades (12) takes place dependent on the rotation angle of the rotor (13).

15. The method according to one of claims 12 to 14, **characterized in that** the determined accelerations, speeds and/or positions of the individual measurement sites (1) and/or the determined deformations of the rotor blade (12), is compared to a model, wherein deviations from the model are preferably used for recognizing deformation patterns, and/or that the determined deformations are compared to a number of stored deformation patterns, which may particularly comprise bending shapes and/or temporal dependencies, wherein preferably, that deformation pattern is selected which has the smallest deviations from the deformations determined.

**Revendications**

1. Dispositif de mesure (10) pour la mesure de déformations, plus particulièrement de flexions, de la surface externe d'un élément de construction (12, 14, 15, 16) d'une éolienne (11), dans lequel l'élément de construction est une pale de rotor (12) de l'éolienne (11), comprenant :

   au moins trois, de préférence au moins cinq, points de mesure (1) disposés sur l'élément de construction (12, 14, 15, 16), qui sont distants entre eux dans la direction de l'extension longitudinale de l'élément de construction (12) et qui comprennent chacun au moins un capteur d'accélération (2),
   dans lequel les capteurs d'accélération (2) peuvent être reliés en communication avec un dispositif d'analyse (6), de préférence par l'intermédiaire d'une interface sans fil (5),
   **caractérisé en ce que** le dispositif de mesure (10) comprend au moins deux capteurs de vitesse (3), plus particulièrement des capteurs de vitesse angulaire, disposés sur l'élément de construction (12) et distants entre eux dans la direction de l'extension longitudinale de l'élément de construction (12),
   et/ou **en ce que** le dispositif de mesure (10) comprend au moins deux capteurs de position (4), plus particulièrement des capteurs de champ magnétique, disposés sur l'élément de construction (12) et distants entre eux dans la direction de l'extension longitudinale de l'élément de construction (12),
   dans lequel les points de mesure (1) comprennent chacun, en plus du capteur d'accélération (2), au moins un capteur de vitesse (3) et/ou au moins un capteur de position (4) et
   dans lequel les capteurs de vitesse (3) et/ou les capteurs de position (4) peuvent être reliés en communication avec le dispositif d'analyse (6), de préférence par l'intermédiaire d'une interface sans fil (5),
   et **en ce qu'**au moins un, de préférence au moins deux, des points de mesure (1) est/sont disposé(s) au niveau de la pointe de la pale de rotor et/ou à une distance de la pointe de pale de rotor, qui est plus grande que 20 % de la longueur totale de la pale du rotor (12), et **en ce que**
   au moins un point de mesure (1) est disposé à l'écart des droites de liaison entre les points de mesure (1) les plus extérieurs du dispositif de mesure (10), de préférence entre le point de mesure (1), qui est le plus proche de la base de la pale de rotor et le point de mesure (1) qui est le plus proche de la point de la pale de rotor, dans lequel, de préférence, la distance normale par rapport aux droites de liaison est égale à au moins 20 cm, de préférence au moins 50 cm et/ou représente au moins 0,5 %, de préférence au moins 1 % de l'extension longitudinale de l'élément de construction (12),
   et/ou **en ce qu'**au moins un point de mesure (1) est disposé sur une première face, plus particulièrement la face avant, de l'élément de construction (12) et au moins un point de mesure (1) est disposé sur une deuxième face opposée à la première face, plus particulièrement la face arrière, de l'élément de construction (12).

2. Dispositif de mesure selon la revendication 1, **caractérisé en ce que** la distance entre un capteur d'accélération (2) et un capteur de vitesse (3) et/ou capteur de position (4) appartenant au même point de mesure (1) est égale à 5 cm maximum, de préférence 1 cm maximum, plus particulièrement de préférence 5 mm maximum, et/ou **en ce que** le capteur d'accélération (2) d'un point de mesure (1) est intégré, conjointement avec un capteur de vitesse (3) appartenant au même point de mesure (1) et/ou un capteur de position (4) appartenant au même point de mesure (1), dans une unité de mesure (17) et/ou est logé dans un boîtier commun.

3. Dispositif de mesure selon l'une des revendications précédentes, **caractérisé en ce que** les capteurs d'accélération (2) sont conçus respectivement pour la mesure de l'accélération dans 3 directions de l'espace et/ou **en ce que** les capteurs de vitesse (3) sont conçus respectivement pour la mesure de la vitesse dans 3 directions de l'espace et/ou **en ce que** les capteurs de position (4) sont conçus respectivement pour la mesure de la position ou de l'orientation dans 3 directions de l'espace.

4. Dispositif de mesure selon l'une des revendications précédentes, **caractérisé en ce que** l'unité de mesure (17) présente une base plane, qui supporte les capteurs (2, 3, 4), dans lequel, de préférence, la base plane est constituée d'un matériau de type film et/ou flexible et supporte, de préférence, au moins un élément fonctionnel supplémentaire, plus particulièrement une interface sans fil (5) reliée avec les capteurs (2, 3, 4), pour la transmission des données des capteurs à une unité d'analyse (6) et/ou un dispositif de conversion d'énergie (7) pour l'alimentation des capteurs (2, 3, 4) en énergie, dans lequel, de préférence, la base plane est collée à la surface de la pale de rotor (12) de l'éolienne (11).

5. Dispositif de mesure selon l'une des revendications précédentes, **caractérisé en ce que** les capteurs d'accélération (2) et/ou les capteurs de vitesse (3) et/ou les capteurs de position (4) sont disposés, de préférence collés, sur une surface externe de la pale de rotor (12) et/ou **en ce que** les capteurs d'accélération (2) et/ou les capteurs de vitesse (3) et/ou les capteurs de position (4) sont conçus comme des système micro-électro-mécaniques (MEMS).

6. Dispositif de mesure selon l'une des revendications précédentes, **caractérisé en ce que** le dispositif d'analyse (6) est conçu pour combiner les données d'accélération des capteurs d'accélération (2) avec les données de vitesse des capteurs de vitesse (3) et/ou les données de position des capteurs de position (4) et en déduire les déformations de l'élément de construction (12).

7. Dispositif de mesure selon l'une des revendications précédentes, **caractérisé en ce que** les capteurs (2, 3, 4) des différents points de mesure (1) du dispositif de mesure (10) peuvent être synchronisés dans le temps par le dispositif d'analyse, de préférence au moyen d'un signal envoyé aux capteurs (2, 3, 4) par le dispositif d'analyse (6), plus particulièrement sous la forme d'un paquet de données, plus particulièrement en ce qui concerne le moment de la mesure effectuée par les capteurs (2, 3, 4) respectifs et/ou le moment de la transmission des données de capteurs au dispositif d'analyse (6) par les capteurs (2, 3, 4).

8. Dispositif de mesure selon l'une des revendications précédentes, **caractérisé en ce que** le dispositif d'analyse (6) est conçu pour transmettre aux capteurs (2, 3, 4) des points de mesure (1) un signal à l'aide duquel les capteurs (2, 3, 4) des différents points de mesure (1) sont synchronisés dans le temps, de sorte que les capteurs (2, 3, 4) ainsi synchronisés effectuent chacun, dans une fenêtre de temps commune, qui est égale, de préférence à 500 $\mu$s maximum, de préférence à 100 $\mu$s maximum, plus particulièrement de préférence à 50 $\mu$s maximum, au moins une mesure,
et/ou **en ce que** le dispositif d'analyse (6) est conçu pour déterminer les déformations et/ou les grandeurs et/ou les propriétés à partir des données de capteurs qui ont été enregistrées par les capteurs (2, 3, 4) synchronisés dans une fenêtre de temps commune, qui est égale, de préférence à 500 $\mu$s maximum, de préférence à 100 $\mu$s maximum, plus particulièrement de préférence à 50 $\mu$s maximum.

9. Dispositif de mesure selon l'une des revendications précédentes, **caractérisé en ce que** le dispositif d'analyse est conçu pour déterminer, à partir des données des capteurs (2, 3, 4), plus particulièrement par combinaison des données d'accélération des capteurs d'accélération (2) avec les données de vitesse des capteurs de vitesse (3) et/ou des données de position des capteurs de position (4), au moins une, de préférence plusieurs, des grandeurs et/ou propriétés suivantes :

- l'angle d'inclinaison absolu d'au moins une pale de rotor et/ou
- l'angle d'inclinaison relatif d'au moins deux pales de rotor l'une par rapport à l'autre et/ou
- la torsion d'au moins une pale de rotor et/ou d'au moins deux pales de rotor l'une par rapport à l'autre et/ou
- la charge et/ou le cycle de charge agissant sur au moins une pale de rotor et/ou
- une source d'émissions sonores accrues et/ou
- un signe précoce d'un dommage ou d'un état de régulation erroné de l'éolienne et/ou
- le type, la force, la dynamique et/ou la direction des vents et/ou
- une variation du comportement vibratoire de l'élément de construction et/ou
- un endommagement de la pale de rotor,

dans lequel, de préférence, la détermination de la ou des grandeur(s) et/ou propriété(s) comprend une comparaison entre des données actuelles et des données historiques et/ou une comparaison entre les données d'une pale de rotor et les données d'au moins une autre pale de rotor.

10. Éolienne (11) comprenant

un rotor (13) avec au moins deux, de préférence trois, pales de rotor (12) et
au moins un dispositif de mesure (10) pour la mesure de déformation d'au moins un élément de construction de l'éolienne (11), dans lequel l'élément de construction est une pale de rotor (12) de l'éolienne (11) et
un dispositif de commande (8),
**caractérisée en ce que** l'au moins un dispositif de mesure (10) est conçu selon l'une des revendications précédentes.

11. Éolienne selon la revendication 10, **caractérisée en ce que**, pour au moins deux pales de rotor (12) de l'éolienne (11), plus particulièrement pour chaque pale de rotor (12) du rotor (13), est prévu un dispositif de mesure (10) selon l'une des revendications 1 à 9, dans lequel, de préférence, les capteurs (2, 3, 4) des dispositifs de mesure (10) sont reliés en communication avec un dispositif d'analyse central (6), de préférence par l'intermédiaire d'une interface sans fil (5),

et/ou **en ce que** le dispositif de commande (8) est conçu pour contrôler l'éolienne (10) en fonction des signaux de capteurs générés par les points de mesure (1) du dispositif de mesure (10), plus particulièrement pour orienter le rotor (13) en fonction de la direction du vent et/ou pour ajuster l'angle d'inclinaison des pales de rotor (12).

12. Procédé de fonctionnement d'une éolienne (11), qui comprend un rotor (13) avec des pales de rotor (12) et au moins un dispositif de mesure (10) pour la mesure de déformations, plus particulièrement de flexions de la surface externe d'un élément de construction de l'éolienne (11), cet élément de construction étant une pale de rotor (12), dans lequel, au moyen de l'au moins un dispositif de mesure (10) sur au moins une pale de rotor (12), de préférence respectivement sur toutes les pales de rotor (12) du rotor (13), au niveau d'au moins deux points de mesure (1) disposés sur la pale de rotor (12), qui sont distants entre eux dans la direction d'une extension, de préférence l'extension longitudinale, de la pale de rotor (12), des données d'accélération sont relevées,

> **caractérisé en ce que**, au niveau d'au moins deux points disposés sur la pale de rotor (12) et distants entre eux dans la direction de l'extension longitudinale de la pale de rotor (12), des données de vitesse et/ou des données de position sont relevées, dans lequel, de préférence, les données de vitesse et/ou les données de position sont relevées au niveau des mêmes points de mesure (1) que ceux au niveau desquels les données d'accélération sont relevées,
>
> et **en ce que** les données d'accélération sont combinées avec les données de vitesse et/ou les données de position afin de déterminer les déformations de la pale de rotor (12), de préférence à l'aide d'un dispositif d'analyse (6) relié en communication avec les capteurs (2, 3, 4) et **en ce que** le dispositif de mesure (10) est conçu selon l'une des revendications 1 à 9 et/ou l'éolienne (11) est conçue selon l'une des revendications 10 à 11.

13. Procédé selon la revendication 12, **caractérisé en ce que**, à partir des données d'accélération relevées au niveau d'un point de mesure (1) et des données de vitesse et/ou des données de position relevées au niveau du même point de mesure (1), la position du point de mesure (1) est déterminée, dans lequel la position déterminée du point de mesure (1) est une position relative par rapport à un point de référence, plus particulièrement la base de la pale de rotor et/ou l'axe du rotor et/ou est une position absolue, dans lequel, de préférence, à partir des positions déterminées de plusieurs points de mesure (1), la déformation de l'élément de construction (12), plus particulièrement une évolution de la flexion le long d'une extension, de préférence l'extension longitudinale, de l'élément de construction (12), est déterminée, dans lequel, de préférence, la déformation de l'élément de construction (12) est déterminée dans 3 dimensions.

14. Procédé selon la revendication 12 ou 13, **caractérisé en ce que**, à partir des données d'accélération ainsi que des données de vitesse et/ou des données de position déterminées, les positions des points de mesure (1) sont déterminées en fonction du temps et/ou **en ce que** les déformations de l'élément de construction (12) sont déterminées en fonction du temps et/ou en fonction de l'angle de rotation du rotor (13) et/ou **en ce que** le contrôle de l'éolienne (11) est effectué de sorte que le réglage de l'inclinaison d'une ou de plusieurs pales de rotor (12) est effectué en fonction de l'angle de rotation du rotor (13).

15. Procédé selon l'une des revendications 12 à 14, **caractérisé en ce qu'**une comparaison des accélérations, vitesses et/ou positions déterminées des différents points de mesures (1) et/ou des déformations déterminées de la pale de rotor (12), avec un modèle, est effectuée, dans lequel, de préférence, les écarts par rapport au modèle sont utilisés pour la détection de motifs de déformations,

et/ou **en ce que** les déformations déterminées sont comparées avec plusieurs motifs de déformations enregistrés, qui peuvent comprend, plus particulièrement des formes de flexion et/ou des dépendances en fonction du temps, dans lequel, de préférence, le motif de déformation sélectionné est celui qui présente les écarts les plus faibles par rapport aux déformations déterminées.

# Fig.1

# Fig.2

# Fig.3

# Fig.4

**Fig.5**

**Fig.6**

## Fig.7

$a_1(t), v_1(t)$      $a_2(t), v_2(t)$    $\cdots$

$A\,[a_1(t),v_1(t)]$    $A\,[a_2(t),v_2(t)]$   $\cdots$

$x_1(t)$       $x_2(t)$     $\cdots$

$V\,[x_1(t),x_2(t),\dots]$

## Fig.8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2202406 A2
- US 2015118047 A1
- US 2011150647 A1

- US 8951011 B2
- DE 102018119733 A1
- DE 102010032120 A1